# EUROPÄISCHE PATENTANMELDUNG

(11) **EP 4 289 251 A1**
(43) Veröffentlichungstag der Anmeldung: **13.12.2023**
(21) Anmeldenummer: 22178487.9
(22) Anmeldetag: 10.06.2022
(51) Int. Cl.: A01D 34/416

(54) **ANORDNUNG EINES MÄHKOPFES, EINER ABTRIEBSWELLE ZUR AUFNAHME EINES MÄHKOPFES UND EINER BEFESTIGUNGSVORRICHTUNG ZUR FIXIERUNG DES MÄHKOPFES AUF DER ABTRIEBSWELLE SOWIE ARBEITSGERÄT MIT EINER SOLCHEN ANORDNUNG**

(71) Anmelder: Andreas Stihl AG & Co. KG, 71336 Waiblingen (DE)
(72) Erfinder: FÖRG, Timo, 71546 Aspach (DE); SORG, Andreas, 73614 Schorndorf (DE); SCHMIDT, Sebastian, 74366 Kirchheim a.N. (DE); FLÖß, Felix, 71334 Waiblingen (DE); GINDELE, Cornelius, 73207 Plochingen (DE); RETHABER, Achim, 70736 Fellbach (DE); HAUG, Simon, 71336 Waiblingen (DE); NEUMAIER, Thomas, 71336 Waiblingen (DE); REICHARD, Julian, 76133 Karlsruhe (DE); FÖRSTNER, Dirk, 71384 Weinstadt (DE); ESCHER, Christina, 71566 Althütte (DE)
(74) Vertreter: Karzel, Philipp

(57) **Zusammenfassung**

Die Erfindung betrifft eine Anordnung eines Mähkopfes (3), einer Abtrieswelle (8) und einer Befestigungsvorrichtung (10), wobei die Abtriebswelle (8) um eine Drehachse (9) rotierend antreibbar ist, wobei die Anordnung (2) eine Verdrehsicherung (11) und eine axiale Sicherung (16) aufweist, wobei der Mähkopf (3) durch die Verdrehsicherung (11) auf der Abtriebswelle (8) drehfest gehalten ist, wobei die axiale Sicherung (16) in einer Sperrstellung (30) den Mähkopf (3) auf der Abtriebswelle (8) gegen eine Relativbewegung in Richtung der Drehachse (9) der Abtriebswelle (8) formschlüssig sichert und in einer Außerbetriebsstellung (31) den Mähkopf (3) zum Lösen von der Abtriebswelle (8) freigibt, wobei die Befestigungsvorrichtung (10) ein für den Bediener zugängliches Stellelement (24) umfasst, wobei die axiale Sicherung (16) mittels des Stellelementes (24) in die Sperrstellung (30) und in die Außerbetriebsstellung (31) schaltbar ist.

## Beschreibung

Die Erfindung betrifft eine Anordnung eines Mähkopfes, einer Abtriebswelle zur Aufnahme eines Mähkopfes und einer Befestigungsvorrichtung zur Fixierung des Mähkopfes auf der Abtriebswelle der im Oberbegriff des Anspruchs 1 angegebenen Gattung sowie ein Arbeitsgerät mit einer solchen Anordnung.

Freischneider dienen zum Mähen von Gras, Gestrüpp oder Ähnlichem. Hierzu wird ein Mähkopf mit einem Werkzeug um eine Drehachse des Mähkopfes rotierend angetrieben, wodurch das Gras oder das Gestrüpp bei Kontakt mit dem Werkzeug abgeschnitten wird. Als Werkzeug können Schneidmesser, Schneidfaden oder dgl. vorgesehen sein.

Es sind Freischneider bekannt, deren Mähkopf lösbar auf der Abtriebswelle gehalten ist. Hierfür wird der Mähkopf üblicherweise über eine Schraubverbindung an der Abtriebswelle des Freischneiders befestigt. Nachteilig an derartigen Anordnungen ist, dass zum Auf- und Abschrauben des Mähkopfes die Abtriebswelle fixiert werden muss. Hierzu werden beispielsweise Arretierungen, wie beispielsweise Sperrstifte, vorgesehen, die eine Drehung des Getriebes bzw. der Abtriebswelle blockieren. Die Fixierung des Getriebes oder der Abtriebswelle erfolgt zumeist mit Werkzeugen, die der Bediener dann im Betrieb des Freischneiders permanent mit sich führen muss oder die am Freischneider montiert sind. Das Lösen und Befestigen des Mähkopfes an der Abtriebswelle gestaltet sich somit aufwendig und zeitintensiv.

Der Erfindung liegt die Aufgabe zugrunde, eine Anordnung eines Mähkopfes, einer Abtriebswelle zur Aufnahme eines Mähkopfes und einer Befestigungsvorrichtung zur Fixierung des Mähkopfes auf der Abtriebswelle anzugeben, die ein einfaches und schnelles Befestigen / Lösen eines Mähkopfes an /von der Abtriebswelle ermöglicht.

Diese Aufgabe wird durch eine Anordnung eines Mähkopfes, einer Abtriebswelle zur Aufnahme eines Mähkopfes und einer Befestigungsvorrichtung zur Fixierung des Mähkopfes auf der Abtriebswelle gemäß dem Anspruch 1 gelöst.

Die erfindungsgemäße Anordnung umfasst einen Mähkopf, eine Abtriebswelle und eine Befestigungsvorrichtung. Die Abtriebswelle ist um eine Drehachse rotierend antreibbar. Die Anordnung weist eine Verdrehsicherung und eine axiale Sicherung auf. Der Mähkopf ist durch die Verdrehsicherung auf der Abtriebswelle drehfest gehalten. Die axiale Sicherung sichert in einer Sperrstellung den Mähkopf auf der Abtriebswelle gegen eine Relativbewegung in Richtung der Drehachse der Abtriebswelle formschlüssig und gibt in einer Außerbetriebsstellung den Mähkopf zum Lösen von der Abtriebswelle frei. Die Befestigungsvorrichtung umfasst ein für den Bediener zugängliches Stellelement, wobei die axiale Sicherung mittels des Stellelementes in die Sperrstellung und in die Außerbetriebsstellung schaltbar ist.

Zum Lösen des Mähkopfes von der Abtriebswelle schaltet der Bediener die axiale Sicherung mittels des Stellelementes in die Außerbetriebsstellung und nimmt anschließend den Mähkopf von der Abtriebswelle. Dadurch kann der Mähkopf auf schnelle und einfache Weise von der Abtriebswelle gelöst werden. So kann der Bediener beispielsweise das Schneidmittel des Mähkopfes wechseln und / oder nachfüllen oder sogar den gesamten Mähkopf austauschen.

Ferner ist es von Vorteil, dass die axiale Sicherung den Mähkopf auf der Abtriebswelle formschlüssig gegen eine Relativbewegung in Richtung der Drehachse der Abtriebswelle sichert. Somit ist der Mähkopf in axialer Richtung, also in Richtung der Drehachse des Mähkopfes, auf der Abtriebswelle drehunabhängig gesichert.

Besonders bevorzugt ist die Verdrehsicherung als eine formschlüssige Verbindung ausgebildet. Durch die Ausbildung der Verdrehsicherung als eine formschlüssige Verbindung ist der Mähkopf auf der Abtriebswelle sowohl in einer ersten Drehrichtung um die Drehachse als auch in einer zweiten, der ersten Drehrichtung entgegengesetzten Drehrichtung drehfest angeordnet.

Die Befestigungsvorrichtung ist vorzugsweise derart ausgebildet, dass der Mähkopf auf der Abtriebswelle werkzeuglos befestigbar und lösbar ist. Dies ermöglicht dem Bediener einen schnellen und einfachen Wechsel des Mähkopfes am Einsatzort des Freischneiders. Das Mitführen von Werkzeugen oder Ähnlichem zum Lösen und / oder zum Befestigen des Mähkopfes von / auf der Abtriebswelle ist nicht notwendig.

Es ist vorteilhaft vorgesehen, dass die axiale Sicherung eine Haltekontur und eine Sicherungskontur umfasst, wobei in der Sperrstellung der axialen Sicherung die Haltekontur in die Sicherungskontur eingreift. Durch das Ineinandergreifen von Haltekontur und Sicherungskontur ist der Mähkopf axial auf der Abtriebswelle gesichert. Ist die Wirkverbindung zwischen Haltekontur und Sicherungskontur aufgehoben, befindet sich die axiale Sicherung in ihrer Außerbetriebsstellung.

Besonders vorteilhaft ist die Haltekontur bezüglich der Drehachse der Abtriebswelle durch das Stellelement insbesondere radial verschiebbar ausgebildet. Vorteilhaft ist die Haltekontur Teil der Befestigungsvorrichtung und die Sicherungskontur ist bevorzugt am Mähkopf ausgebildet. In einer alternativen Ausgestaltung der erfindungsgemäßen Anordnung kann es auch vorgesehen sein, dass die Haltekontur Teil des Mähkopfes ist und die Sicherungskontur an der Abtriebswelle ausgebildet ist.

Besonders bevorzugt ist die Haltekontur an einem Schieberahmen ausgebildet. Der Schieberahmen umfasst vorteilhaft eine Öffnung, wobei die Sicherungskontur bevorzugt in der Öffnung des Schieberahmens angeordnet ist. Befindet sich die axiale Sicherung in ihrer Sperrstellung, liegt der Schieberrahmen mit seiner Haltekontur an der Sicherungskontur des Mähkopfes an, wodurch der Mähkopf an dem Schieberrahmen axial gesichert ist. Befindet sich die axiale Sicherung in ihrer Außerbetriebsstellung, liegt die Sicherungskontur des Mähkopfes frei in der Öffnung des Schieberrahmens der Befestigungsvorrichtung, so dass die Sicherungskontur des Mähkopfes aus der Öffnung des Schieberrahmens herausgezogen werden kann.

In einer alternativen Ausgestaltung der erfindungsgemäßen Anordnung kann es auch bevorzugt vorgesehen sein, dass die Haltekontur durch mindestens einen in die Sicherungskontur greifenden Sperrkörper, insbesondere eine Kugel, ausgebildet ist.

Es ist vorteilhaft vorgesehen, dass die Befestigungsvorrichtung einen einteilig ausgebildeten Grundkörper umfasst, wobei an dem Grundkörper der Befestigungsvorrichtung ein Lüfterrad ausgebildet ist. Der Grundkörper weist bevorzugt eine Aufnahmetasche auf, wobei in der Aufnahmetasche das Stellelement der Befestigungsvorrichtung gehalten ist. Besonders bevorzugt umfasst die Befestigungsvorrichtung lediglich ein einziges Stellelement. Somit muss der Bediener zum Lösen des Mähkopfes lediglich dieses Stellelement betätigen.

Es ist bevorzugt vorgesehen, dass die Anordnung ein Federelement umfasst, wobei das Federelement derart mit der Haltekontur wirkverbunden ist, dass die Haltekontur in die Sicherungskontur gespannt ist. Folglich ist die Haltekontur über das Federelement in die Sicherungskontur vorgespannt. Um den Mähkopf von der Abtriebswelle zu lösen, muss das Stellelement entgegen der Federkraft des Federelementes eingedrückt werden, bis die Haltekontur die Sicherungskontur der Abtriebswelle wieder freigibt und sich die axiale Sicherung in der Außerbetriebsstellung befindet. Anschließend kann der Mähkopf von der Abtriebswelle abgenommen werden. Es kann vorteilhaft auch vorgesehen sein, dass das Stellelement in einer Offenstellung einrastet. Der Bediener kann den Mähkopf auf einfache Weise von der Abtriebswelle nehmen, ohne das Stellelement permanent drücken zu müssen. In einer alternativen Ausführung kann es auch vorgesehen sein, kein Federelement vorzusehen. Die Haltekontur und die Sicherungskontur sind derart zueinander angeordnet, dass im Betrieb der Anordnung die Haltekontur durch die auf die Haltekontur wirkende Fliehkraft in die Sicherungskontur gedrückt wird. Dadurch wird auch ohne Federelement eine sichere Wirkverbindung zwischen Haltekontur und Sicherungskontur gewährleistet.

Es ist vorteilhaft vorgesehen, dass die Anordnung eine Sperreinheit umfasst, wobei die Sperreinheit das Stellelement, die Haltekontur sowie sämtliche Bauteile umfasst, über die die Haltekontur und das Stellelement miteinander wirkverbunden sind, wobei der Massenschwerpunkt der Sperreinheit derart außerhalb der Drehachse liegt, dass im Betrieb der Anordnung die auf die Sperreinheit wirkenden Fliehkräfte die Klemmung der Haltekontur gegen die Sicherungskontur in der Sperrstellung verstärken. Dadurch wird die axiale Sicherung des Mähkopfes auf der Abtriebswelle verstärkt.

Der Erfindung liegt die weitere Aufgabe zugrunde, ein handgeführtes Arbeitsgerät derart weiterzubilden, dass ein einfaches Befestigen und Lösen eines Mähkopfes auf der Abtriebswelle möglich ist.

Diese Aufgabe wird durch ein handgeführtes Arbeitsgerät gemäß dem Anspruch 15 gelöst.

Weitere Merkmale der Erfindung ergeben sich aus der Beschreibung und der Zeichnung, in der nachstehend im Einzelnen beschriebene Ausführungsbeispiele der Erfindung wiedergegeben sind. Es zeigen:
- Fig. 1: in einer perspektivischen Darstellung einen Freischneider,
- Fig. 2: in einer perspektivischen Darstellung ein vorderes Gehäuse und ein an dem vorderen Gehäuse befestigter Mähkopf,
- Fig. 3: in einer perspektivischen Darstellung von oben die Anordnung des vorderen Gehäuses und des Mähkopfes nach Fig. 2,
- Figuren 4 und 5: in perspektivischen Darstellungen der Mähkopf und das vordere Gehäuse in demontiertem Zustand,
- Fig. 6: in einer seitlichen Schnittdarstellung der Mähkopf und die Befestigungsvorrichtung an der Abtriebswelle montiert,
- Fig. 7: in einer Schnittdarstellung entlang der Pfeile VII gemäß Fig. 6 die Befestigungsvorrichtung mit montiertem Mähkopf,
- Fig. 8: in einer seitlichen Schnittdarstellung der Mähkopf in entsichertem Zustand an der Befestigungsvorrichtung,
- Fig. 9: in einer Schnittdarstellung entlang der Pfeile IX gemäß Fig. 9 die Befestigungsvorrichtung mit entsicherten Mähkopf,
- Fig. 10: in einer perspektivischen Explosionsdarstellung die Befestigungsvorrichtung und die Abtriebswelle,
- Fig. 11: in einer teilweisen Schnittdarstellung die Befestigungsvorrichtung mit eingerasteter Sperreinheit,
- Figuren 12 bis 15: in verschiedenen Perspektiven die Sperreinheit,
- Fig. 16: eine alternative erfindungsgemäße Anordnung mit einer axialen Sicherung zwischen Mähkopf und Befestigungsvorrichtung in der Sperrstellung,
- Fig. 17: die Anordnung nach Fig. 16 in der Außerbetriebsstellung,
- Fig. 18: in einer ausschnittsweisen Explosionsdarstellung die Anordnung nach Fig. 16,
- Fig. 19: eine weitere alternative erfindungsgemäße Anordnung mit Kugeln zur axialen Sicherung in der Sperrstellung,
- Fig. 20: die Anordnung nach Fig. 19 in der Außerbetriebsstellung,
- Fig. 21: eine perspektivische Explosionsdarstellung einer weiteren, alternativen erfindungsgemäßen Anordnung eines nur teilweise dargestellten Mähkopfes und einer Abtriebswelle,
- Fig. 22: eine Schnittdarstellung der erfindungsgemäßen Anordnung nach Fig. 21 in Sperrstellung des Mähkopfes,
- Fig. 23: eine Schnittdarstellung des Mähkopfes nach Fig. 21 in Außerbetriebsstellung,
- Fig. 24: eine perspektivische Darstellung der Sperrelemente des Mähkopfes in Außerbetriebsstellung,
- Fig. 25: eine schematische Schnittdarstellung einer alternativen Ausführung des Mähkopfes mit einer verdrehbaren, axialen Sicherung in Sperrstellung und
- Fig. 26: eine schematische Schnittdarstellung des Mähkopfes nach Fig. 25 in Außerbetriebsstellung.

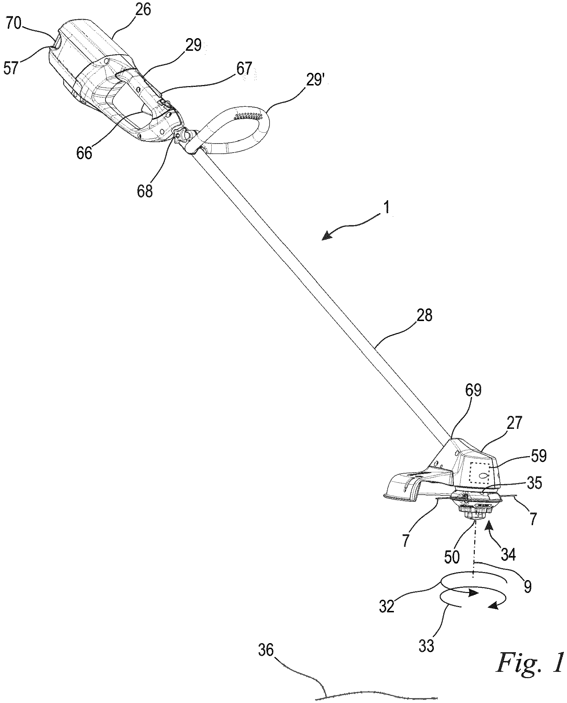

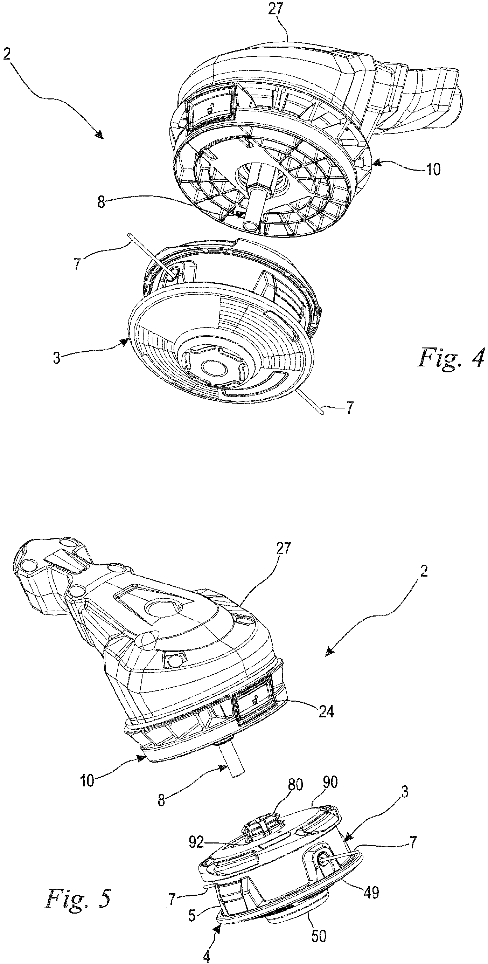

Fig. 1 zeigt als Ausführungsbeispiel für ein handgeführtes Arbeitsgerät 1 einen Freischneider. Das Arbeitsgerät 1 umfasst ein hinteres Gehäuse 26, in dem im Ausführungsbeispiel ein Akku 70 angeordnet ist. Der Akku ist im hinteren Gehäuse 26 über eine Ackuverriegelung 57 gehalten. Am hinteren Gehäuse 26 ist vorteilhaft ein Handgriff 29 ausgebildet, an dem ein Gashebel 66 und eine Gashebelsperre 67 zur Bedienung des Arbeitsgeräts 1 angeordnet sind. Das hintere Gehäuse 26 ist über ein hohles Führungsrohr 28 mit einem vorderen Gehäuse 27 verbunden. Das hintere Gehäuse 26 ist dabei an einem ersten Ende 68 des Führungsrohrs 28 angeordnet und das vordere Gehäuse 27 an einem zweiten Ende 69 des Führungsrohrs 28. In dem vorderen Gehäuse 27 ist im Ausführungsbeispiel ein lediglich schematisch dargestellter Antriebsmotor 59 angeordnet, der im Ausführungsbeispiel als Elektromotor ausgebildet ist. Aus dem vorderen Gehäuse 27 ragt eine vom Antriebsmotor 59 angetriebene Abtriebswelle 8 (Fig. 4). Die Abtriebswelle 8 treibt einen auf der Abtriebswelle 8 gehaltenen Mähkopf 3 rotierend an. Der Mähkopf 3 wird um eine Drehachse 9 in einer ersten Drehrichtung 32, und insbesondere in einer der ersten Drehrichtung 32 entgegengesetzten zweiten Drehrichtung 33 angetrieben. Der Mähkopf 3 besitzt mindestens ein Schneidwerkzeug 7, das im vorliegenden Ausführungsbeispiel in Form zweier Mähfaden ausgebildet ist. Das Schneidwerkzeug 7 kann auch in Form von Schneidmessern, die am Mähkopf 3 befestigt sind, ausgeführt sein. Das Schneidwerkzeug 7 dient zum Schneiden von Schnittgut wie Gras, Gestrüpp oder dgl. Am Mähkopf 3 ist eine im Betrieb dem Boden 36 zugewandte Unterseite 34 ausgebildet, die an der dem Führungsrohr 28 abgewandten Seite des Mähkopfs 3 angeordnet ist. An der dem Schaft 28 zugewandten Seite des Mähkopfes 3 ist die Oberseite 35 des Mähkopfes 3 ausgebildet. Zum Nachstellen der Mähfaden ist vorteilhaft an einer Unterseite 34 des Mähkopfes 3 ein Betätigungselement 50 angeordnet. Benachbart zum hinteren Gehäuse 26 ist am Führungsrohr 28 ein weiterer Handgriff 29' vorgesehen, der im Ausführungsbeispiel als Bügelgriff ausgebildet ist.

In einer alternativen nicht näher dargestellten Ausführung des Arbeitsgerätes 1 kann der Antriebsmotor 59 auch als Verbrennungsmotor ausgebildet sein. Dann wäre der Antriebsmotor 59 bevorzugt in dem hinteren Gehäuse 26, angeordnet, wobei im Schaft 28 eine Antriebswelle verläuft. Es kann vorgesehen sein, dass die Antriebswelle im Schaft unmittelbar mit der Abtriebswelle 8 für den Mähkopf 3 verbunden ist und/oder die Abtriebswelle 8 bildet, demnach kein Getriebe zwischengeschaltet ist. Alternativ ist im vorderen Gehäuse 27 ein Getriebe vorgesehen. Es kann auch bei einem als Elektromotor ausgebildeten Antriebsmotor 59 vorteilhaft sein, den Antriebsmotor 59 im hinteren Gehäuse 27 anzuordnen.

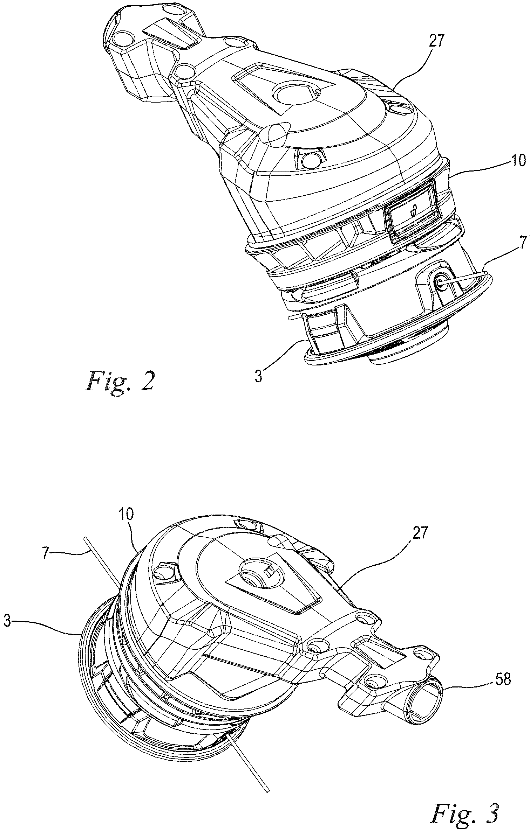

In den Figuren 2 und 3 sind jeweils eine Anordnung des vorderen Gehäuses 27, einer Befestigungsvorrichtung 10 und des Mähkopfes 3 gezeigt. Das vordere Gehäuse 27 umfasst eine Aufnahme 58 zur Befestigung an dem zweiten Ende 69 des Führungsrohrs 28.

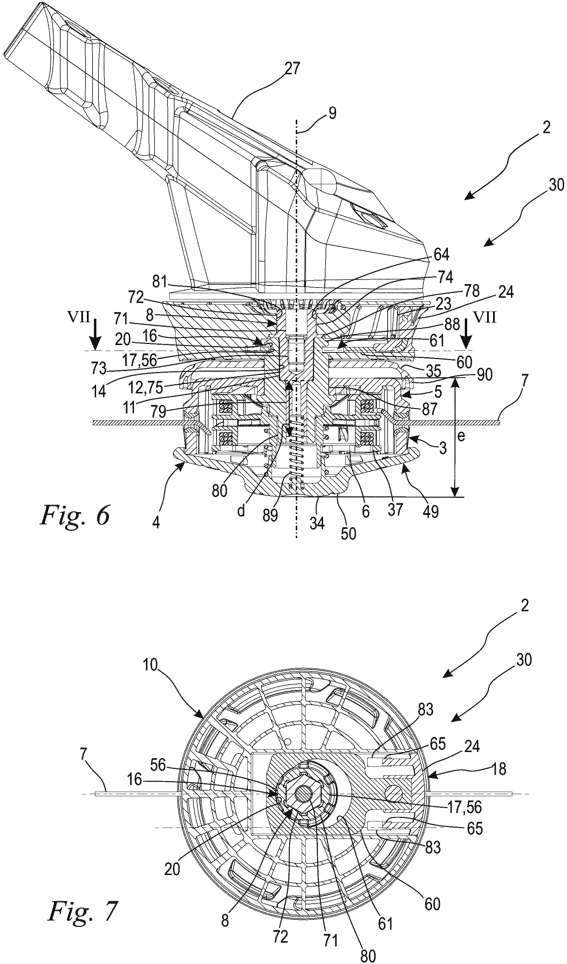

In den Figuren 4 und 5 ist die erfindungsgemäße Anordnung 2 der Befestigungsvorrichtung 10, des Mähkopfes 3 und der Abtriebswelle 8 gezeigt. Der Mähkopf 3 ist von der Abtriebswelle 8 gelöst. Die Abtriebswelle 8 ragt aus dem vorderen Gehäuse 27. Die Abtriebswelle 8 erstreckt sich durch die Befestigungsvorrichtung 10 hindurch. Wie in Fig. 6 gezeigt, umfasst die Abtriebswelle 8 eine durch den Antriebsmotor 59 angetriebene Welle 71 und eine Zwischenwelle 72. Im Ausführungsbeispiel ist die Zwischenwelle 72 auf der Welle 71 über eine Schraubverbindung 73 befestigt. In einer alternativen Ausführung können auch andere Befestigungsarten zweckmäßig sein. In einer alternativen Ausführung kann es auch zweckmäßig sein, dass die Abtriebswelle 8 bestehend aus der Welle 71 und der Zwischenwelle 72 einteilig ausgebildet ist. Es kann vorteilhaft sein, dass die angetriebene Welle 71 die Rotorwelle des Elektromotors bildet.

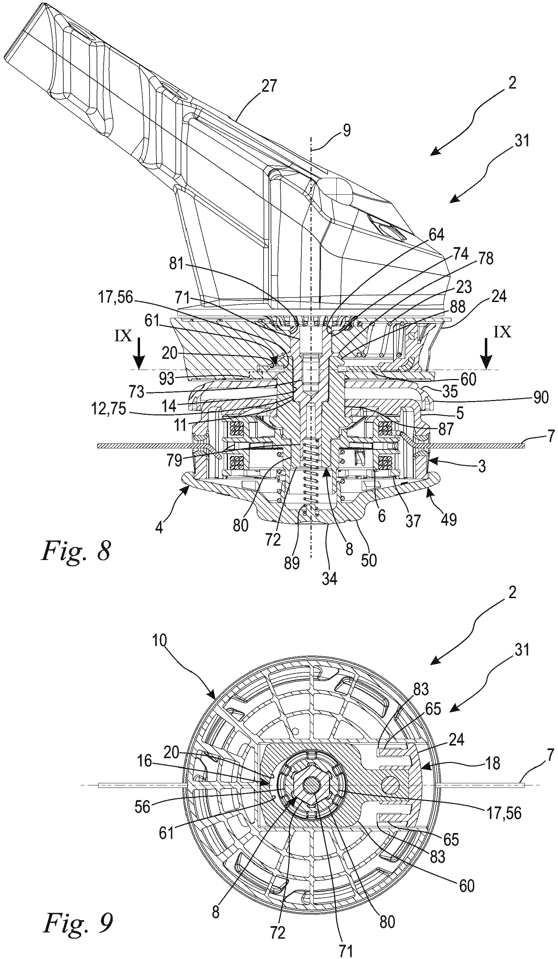

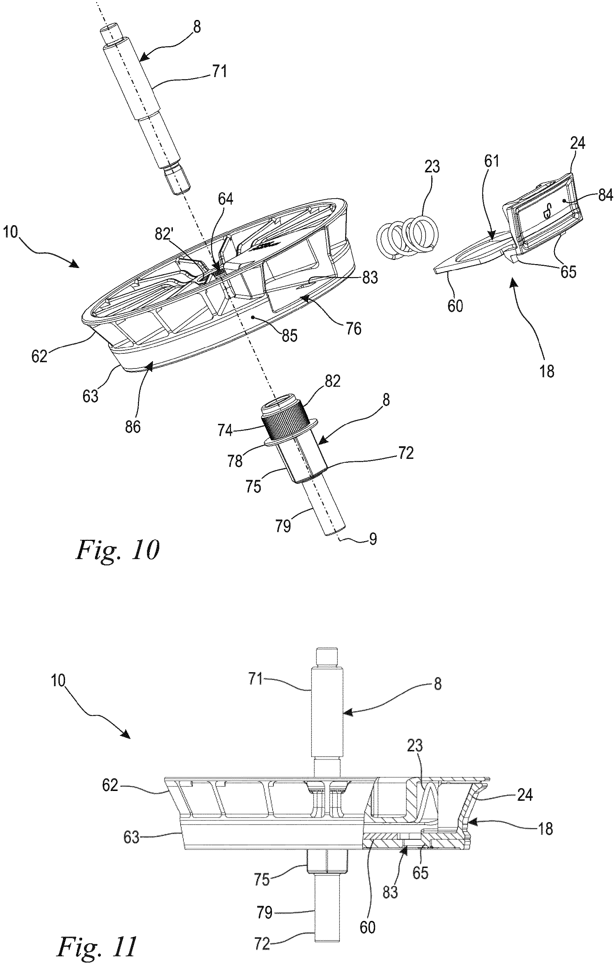

Wie in den Figuren 6 und 8 gezeigt, weist die Zwischenwelle 72 umfangsseitig einen ersten Halteabschnitt 74 auf. Auf dem ersten Halteabschnitt 74 ist die Befestigungsvorrichtung 10 bezogen auf die Drehrichtungen 32, 33 drehfest gehalten. In der bevorzugten Ausführung ist die Befestigungsvorrichtung 10 über eine Pressverbindung 81 auf der Abtriebswelle 8, insbesondere auf dem ersten Halteabschnitt 74 der Zwischenwelle 72 gehalten. Die Befestigungsvorrichtung 10 umfasst eine Nabe 64. Die Nabe 64 der Befestigungsvorrichtung 10 sitzt auf dem ersten Halteabschnitt 74. Wie in der Fig. 10 gezeigt, ist der erste Halteabschnitt 74 mit einer Rändelung 82 versehen. Die Nabe 64 ist mit ihrer den ersten Halteabschnitt 74 kontaktierenden Fläche ebenfalls mit einer Rändelung 82' versehen. Die gegenseitig ineinandergreifenden Rändelungen 82, 82' zwischen der Nabe 64 der Befestigungsvorrichtung 10 und dem ersten Halteabschnitt 74 der Zwischenwelle 72 in Verbindung mit der Pressverbindung 81 erhöhen das zu übertragende maximale Drehmoment zwischen der Abtriebswelle 8 und der Befestigungsvorrichtung 10. Die Zwischenwelle 72 umfasst eine Wellenschulter 78. Die Wellenschulter 78 grenzt bevorzugt unmittelbar an dem ersten Halteabschnitt 74 der Zwischenwelle 72 an. Die Wellenschulter dient zur axialen Sicherung der Befestigungsvorrichtung 10 auf der Zwischenwelle 72, insbesondere als axialer Anschlag beim Aufpressen der Befestigungsvorrichtung 10 auf die Abtriebswelle 8. In einer alternativen Ausführung kann es auch zweckmäßig sein, lediglich eine Pressverbindung oder eine andere Verbindung vorzusehen, mittels derer die Befestigungsvorrichtung 10 drehfest auf der Abtriebswelle 8 gehalten ist.

Wie in den Figuren 6 und 8 gezeigt, ist der Mähkopf 3 auf der Abtriebswelle 8 gehalten. Der Mähkopf 3 ist mittels einer Verdrehsicherung 11 auf der Abtriebswelle 8 drehfest gehalten. Die Verdrehsicherung 11 verhindert eine Relativdrehung zwischen dem Mähkopf 3 und der Abtriebswelle 8. Im bevorzugten Ausführungsbeispiel ist die Verdrehsicherung 11 durch eine formschlüssige Verbindung gebildet. Es kann auch zweckmäßig sein, eine alternative drehfeste Verbindung vorzusehen. Die Verdrehsicherung 11 ist aus einem ersten Teil 12 und einem zweiten Teil 14 gebildet. Im bevorzugten Ausführungsbeispiel ist der erste Teil 12 der Verdrehsicherung durch einen zweiten Halteabschnitt 75 der Zwischenwelle 72 gebildet. Wie insbesondere in Fig. 10 gezeigt, ist der zweite Halteabschnitt 75 als ein Sechskant ausgebildet. Über den Sechskant kann der Mähkopf 3 auf der Abtriebswelle 8 formschlüssig in Drehrichtung 32, 33 gehalten werden.

In einer alternativen Ausführung kann die Welle 71 der Abtriebswelle 8 als eine Durchgangswelle ausgebildet sein. In einer solchen Ausführung kann von einer Zwischenwelle 72 abgesehen werden. Der erste Halteabschnitt 74, die Wellenschulter 78 und/oder der zweite Halteabschnitt 75 sind bevorzugt an der Welle 71 ausgebildet. In einer weiteren Ausführung kann es vorgesehen sein, den ersten Halteabschnitt 74, die Wellenschulter 78 und/oder den zweiten Halteabschnitt 75 durch eine oder mehrere Hülsen auszubilden, die auf der Welle 71 befestigt sind.

Wie in den Figuren 6 und 8 gezeigt, umfasst der Mähkopf 3 eine Aufnahmeeinheit 80. Der Mähkopf 3 ist über die Aufnahmeeinheit 80 auf der Abtriebswelle 8 gehalten. Die Aufnahmeeinheit 80 liegt mit einer Gegenkontur auf dem Sechskant der Zwischenwelle 72 an. Die Gegenkontur der Aufnahmeeinheit 80 bildet somit den zweiten Teil 14 der Verdrehsicherung 11. Ist der Mähkopf 3 auf der Abtriebswelle 8 befestigt, sind der erste Teil 12 der Verdrehsicherung 11, insbesondere der Sechskant des zweiten Halteabschnittes 75 der Zwischenwelle 72 mit dem zweiten Teil 14 der Verdrehsicherung 11, insbesondere der Gegenkontur der Aufnahmeeinheit 80 des Mähkopfes 3 drehfest, insbesondere formschlüssig miteinander verbunden.

Wie insbesondere in den Figuren 6, 8 und 10 gezeigt, umfasst die Abtriebswelle 8, insbesondere die Zwischenwelle 72 einen Führungsabschnitt 79. Der Führungsabschnitt 79 schließt an dem zweiten Halteabschnitt 75 der Zwischenwelle 72 an. Der Führungsabschnitt 79 dient zur Anlage des Mähkopfes 3, wodurch dieser radial zur Drehachse 9 der Abtriebswelle 8 gestützt wird. Diese zur Drehachse 9 radiale Stabilisierung des Mähkopfes 3 ist insbesondere gegen hohe Drehzahlen oder andere Belastungen, die auf den Mähkopf 3 wirken, von Vorteil. Ferner erstreckt sich der Führungsabschnitt 79 in Richtung der Drehachse 9 über eine Eintauchtiefe d. Die Eintauschtiefe d entspricht mindestens 30%, vorzugsweise mindestens 50% der in Richtung der Drehachse 9 gemessenen Gesamthöhe e des Mähkopfes 3 in auf der Abtriebswelle 8 montiertem Zustand.

Die Zwischenwelle 72 umfasst folglich einen ersten Halteabschnitt 74, eine an den ersten Halteabschnitt 74 angrenzende Wellenschulter 78, einen an die Wellenschulter 78 angrenzenden zweiten Halteabschnitt 75 und einen an den zweiten Halteabschnitt 75 angrenzenden Führungsabschnitt 79. Der erste Halteabschnitt 74 der Zwischenwelle 72 und der zweite Halteabschnitt 75 der Zwischenwelle 72 sind durch die Wellenschulter 78 getrennt. Die Anordnung der Abschnitte entspricht der genannten Reihenfolge in Richtung vom vorderen Gehäuse 27 zum Mähkopf 3 verlaufend.

Wie insbesondere den Figuren 10 und 11 gezeigt, umfasst die Befestigungsvorrichtung 10 einen Grundkörper 63 und eine Sperreinheit 18. Der Grundkörper 63 weist vorteilhaft ein Lüfterrad 62 auf. In montiertem Zustand der Befestigungsvorrichtung 10 ist das Lüfterrad 62 dem vorderen Gehäuse 27 zugewandt angeordnet. In Betrieb des Arbeitsgerätes 1 ist die Befestigungsvorrichtung 10 und damit auch das Lüfterrad 62 durch die Abtriebswelle 8 drehend angetrieben. Das Lüfterrad 62 erzeugt somit einen Kühlluftstrom zur Kühlung des Antriebsmotors 59. Die Befestigungsvorrichtung 10 umfasst eine Aufnahmetasche 76, wobei in der Aufnahmetasche 76 die Sperreinheit 18 gehalten ist. Die Aufnahmetasche 76 ist an dem Grundkörper 63 ausgebildet. Die Nabe 64 der Befestigungsvorrichtung 10 ist ebenfalls an dem Grundkörper 63 ausgebildet. Der Grundkörper 63 der Befestigungsvorrichtung 10 ist bevorzugt einteilig ausgebildet. Der Grundkörper 63 ist bevorzugt aus Kunststoff. Im bevorzugten Ausführungsbeispiel ist lediglich eine einzige Sperreinheit 18 vorgesehen. Es kann in einer alternativen Ausführung auch zweckmäßig sein, mehrere Sperreinheiten 18, insbesondere zwei Sperreinheiten 18 vorzusehen.

Wie insbesondere in den Figuren 6 und 8 gezeigt, umfasst die erfindungsgemäße Anordnung 2 des Mähkopfes 3, der Abtriebswelle 8 und der Befestigungsvorrichtung 10 eine axiale Sicherung 16. Die axiale Sicherung 16 ist in eine Sperrstellung 30 (Fig. 6 und 7) und in eine Außerbetriebsstellung 31 (Fig. 8 und 9) schaltbar. In der Sperrstellung 30 der axialen Sicherung 16 ist der Mähkopf 3 auf der Abtriebswelle 8 gegen eine Relativbewegung in Richtung der Drehachse 9 der Abtriebswelle 8 formschlüssig gesichert. In der Außerbetriebsstellung 31 der axialen Sicherung 16 ist der Mähkopf 3 zum Lösen von der Abtriebswelle 8 freigegeben. Die axiale Sicherung 16 wird über ein Stellelement 24 betätigt, wobei das Stellelement 24 Teil der Befestigungsvorrichtung 10 ist. Das Stellelement 24 ist derart an dem Grundkörper 63 der Befestigungsvorrichtung 10 angeordnet, dass dieses für den Bediener zugänglich ist. Zum Betätigen des Stellelements 24 muss der Bediener das Stellelement 24 eindrücken.

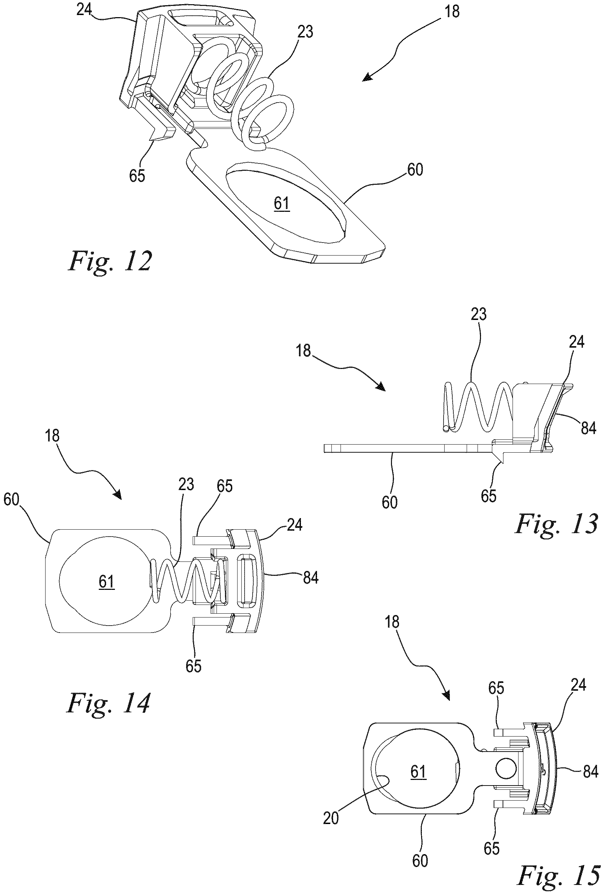

Wie insbesondere in den Figuren 6 und 8 gezeigt, ist die axiale Sicherung 16 aus der Sperreinheit 18 und einer Sicherungskontur 56 gebildet. Die Sperreinheit 18 ist in den Figuren 12 bis 15 dargestellt. Die Sperreinheit 18 umfasst im bevorzugten Ausführungsbeispiel das Stellelement 24, einen mit dem Stellelement 24 wirkverbunden Schieberahmen 60 und ein Federelement 23. Das Stellelement 24 ist bevorzugt aus Kunststoff gebildet. Der Schieberahmen 60 ist insbesondere flächig ausgebildet. Der Schieberahmen 60 ist vorteilhaft aus einem Metallwerkstoff gebildet. Das Stellelement 24 ist im Ausführungsbeispiel einteilig mit dem Schieberahmen 60 ausgebildet. Der Schieberahmen 60 ist teilweise mit dem Stellelement 24 umspritzt. An dem Schieberahmen 60 ist eine Haltekontur 20 vorgesehen. Der Schieberahmen 60 umfasst bevorzugt eine Öffnung 61. Die Haltekontur 20 ist besonders bevorzugt an der Öffnung 61 des Schieberahmens 60 ausgebildet.

Wie insbesondere in den Figuren 6 und 8 dargestellt, ist die Sperreinheit 18 in der Aufnahmetasche 76 der Befestigungsvorrichtung 10 angeordnet. Das Federelement 23 wirkt mit einer Kraft derart auf die Sperreinheit 18, dass diese radial zur Drehachse 9 nach außen vorgespannt ist. Die Sperreinheit 18 ist über eine Schnappverbindung in der Aufnahmetasche 76 der Befestigungsvorrichtung gesichert. Das Federelement 23 ist bevorzugt als Schraubenfeder ausgebildet. Es kann hingegen auch zweckmäßig sein, eine andere Federform vorzusehen. Das Federelement 23 der Sperreinheit 18 ist mit seinem einem Ende an dem Grundkörper 63 der Befestigungsvorrichtung 10 abgestützt. Mit dem anderen Ende des Federelementes 23 wirkt das Federelement 23 auf die Sperreinheit 18 und drückt diese in Richtung radial von der Drehachse 9 weg. Im Ausführungsbeispiel liegt das andere Ende des Federelementes 23 unmittelbar an dem Stellelement 24 der Sperreinheit 18 an.

Wie in den Figuren 10 und 11 gezeigt, ist die Schnappverbindung aus mindestens einem Schnapphaken 65 der Sperreinheit 18 sowie aus mindestens einer Hakenöffnung 83 des Grundkörpers 63 der Befestigungsvorrichtung 10 gebildet. Im bevorzugten Ausführungsbeispiel umfasst die Sperreinheit 18 zwei Schnapphaken 65. Die Schnapphaken 65 sind an dem Stellelement 24 ausgebildet. Es kann auch zweckmäßig sein, die Schnapphaken 65 an dem Schieberahmen 60 vorzusehen. Die Schnapphaken 65 greifen in montiertem Zustand der Befestigungsvorrichtung 10 in Hakenöffnungen 83 ein und bilden die Schnappverbindung. Die Hakenöffnungen 83 sind in der Aufnahmetasche 76 des Grundkörpers 63 der Befestigungsvorrichtung 10 vorgesehen. Die Schnappverbindung bildet für die Sperreinheit 18 einen bezogen auf die Drehachse 9 radialen Außenanschlag im Grundkörper 63. Demnach ist es dem Bediener möglich, das Stellelement 24 entgegen der Federkraft des Federelementes 23 in Richtung zur Drehachse 8 hin zu drücken. Lässt der Bediener das Stellelement 24 los, wird das Stellelement 24 über das Federelement 23 radial von der Drehachse 9 weggeschoben, bis die Schnapphaken 65 in den Hakenöffnung 83 zur Anlage kommen und die Sperreinheit 18 in dem Grundkörper 63 fixieren. In unbetätigtem Zustand des Stellelementes 24 sind eine der Drehachse 9 abgewandte Außenseite 84 des Stellelementes 24 und eine der Drehachse 9 abgewandte Außenseite 85 des Grundkörpers 63 bündig zueinander ausgerichtet. Es ist dadurch für den Bediener auf einfache Weiße optisch und/oder haptisch erkennbar, dass sich die Sperreinheit 18 in der Sperrstellung 30 befindet. Dabei bilden die Außenseite 84 des Stellelementes 24 und die Außenseite 85 des Grundkörpers 63 die Umfangsseite 86 der Befestigungsvorrichtung 10. Die Sperreinheit 18 ist über die Schnappverbindung lösbar an dem Grundkörper 63 befestigt. Möchte der Bediener die Sperreinheit 18 Reinigen, kann dieser die Sperreinheit 18 auf einfache Weise demontieren. Zum Lösen der Sperreinheit 18 sind die Schnapphaken 65 aus den Hakenöffnungen 83 des Grundkörpers 63 zu drücken. Folglich ist der axiale Anschlag der Federhaken aufgehoben, wodurch die Sperreinheit 18 durch das Federelement 23 aus der Aufnahmetasche 76 des Grundkörpers 63 gedrückt wird.

Wie in den Figuren 6 und 7 gezeigt, ist der Mähkopf 3 auf der Abtriebswelle 8 in axialer Richtung, also in Richtung der Drehachse 9, durch die Befestigungsvorrichtung 10 gehalten. Die axiale Fixierung des Mähkopfes 3 auf der Abtriebswelle 8 erfolgt durch die axiale Sicherung 16. Die axiale Sicherung 16 ist aus der Haltekontur 20 der Sperreinheit 18 und aus der Sicherungskontur 56 gebildet. Die Sicherungskontur 56 ist an der Aufnahmeeinheit 80 des Mähkopfes 3 ausgebildet. Die Haltekontur 20 ist in der Sperrstellung 30 der axialen Sicherung 16 derart mit der Sicherungskontur 56 verbunden, dass eine Relativbewegung des Mähkopfes 3 in Richtung der Drehachse 9 unterbunden ist. Die Haltekontur 20 bildet für die Sicherungskontur 56 einen axialen Anschlag. Die Haltekontur 20 und die Sicherungskontur 56 sind vorzugsweise derart ausgebildet, dass eine axiale Relativbewegung des Mähkopfes 3 gegenüber der Befestigungsvorrichtung 10 sowohl zur Befestigungsvorrichtung 10 hin als auch von dieser weg blockiert ist. In einer alternativen Ausführung kann es zweckmäßig sein, dass durch das Zusammenwirken der Haltekontur 20 und der Sicherungskontur 56 lediglich die axiale Relativbewegung des Mähkopfes 3 von der Befestigungsvorrichtung 10 weg blockiert ist.

Wie in den Figuren 6 und 7 gezeigt, ist die Sicherungskontur 56 als eine Nut 17 in der Aufnahmeeinheit 80 ausgebildet. Die Aufnahmeeinheit 80 ist bevorzugt aus einem Rotationskörper gebildet. Auch andere Geometrien können vorteilhaft sein. Die Nut 17 ist bevorzugt umlaufend an der Aufnahmeeinheit 80, insbesondere an einer Umfangsseite 87 der Aufnahmeeinheit 80 ausgebildet. In einer alternativen Ausführung kann es vorgesehen sein, die Nut 17 lediglich abschnittsweise an der Aufnahmeeinheit 80 auszubilden. In montiertem Zustand der erfindungsgemäßen Anordnung 2 ragt die Aufnahmeeinheit 80 durch die Öffnung 61 des Schieberahmens 60 hindurch. Der Schieberahmen 60 ist durch das Federelement 23 mit seiner Haltekontur 20 in die Sicherungskontur 56, insbesondere in die Nut 17, der Aufnahmeeinheit 80 gespannt. Durch das Federelement 23 ist die Haltekontur 20 gegen die Sicherungskontur 56 radial zur Drehachse 9 vorgespannt. In der Sperrstellung 30 ist durch das Federelement 23 das Stellelement 24 mit Schieberahmen 60 und der Haltekontur 20 in die Sicherungskontur 56, insbesondere in die Nut 17 der Aufnahmeeinheit 80 gedrückt, wodurch der Mähkopf 3 an der Befestigungsvorrichtung 10 gegen eine Relativbewegung in axialer Richtung, also in Richtung der Drehachse 9 der Abtriebswelle 8 gesichert ist.

Wie in den Figuren 8 und 9 gezeigt, ist zum Lösen des Mähkopfes 3 von der Befestigungsvorrichtung 10 sowie von der Abtriebswelle 8 das Stellelement 24 durch den Bediener zu betätigen. Mit dem Stellelement 24 wird entgegen der Federkraft des Federelements 23 die Haltekontur 20 aus der Sicherungskontur 56 der Aufnahmeeinheit 80 gedrückt, wodurch die Sicherungskontur 56 und die Haltekontur 20 nicht mehr wirkverbunden sind. In diesem Zustand befindet sich die axiale Sicherung 16 in der Außerbetriebsstellung 31. In der Außerbetriebsstellung 31 bildet die Haltekontur 20 für die Sicherungskontur 56 keinen axialen Anschlag, wodurch der Mähkopf 3 von der Abtriebswelle 8 gezogen werden kann.

Wie in den Figuren 6 bis 9 gezeigt, bilden die Haltekontur 20 und die Sicherungskontur 56 in der Sperrstellung 30 der axialen Sicherung 16 eine formschlüssige Verbindung. Demnach kann der Mähkopf 3 erst dann von der Abtriebswelle 8 abgezogen werden, wenn die formschlüssige Verbindung durch Betätigen des Stellelementes 24 aufgehoben wurde. Das der Befestigungsvorrichtung 10 zugewandte Ende der Aufnahmeeinheit 80 besitzt eine Fase 88. Die Sicherungskontur 56 ist benachbart zur Fase 88 ausgebildet. Zum befestigen des Mähkopfes 3 auf der Abtriebswelle 8 ist der Mähkopf 3 mit seiner Aufnahmeeinheit 80 lediglich auf die Abtriebswelle 8 aufzuschieben. Durch die Konizität der Fase 88 der Aufnahmeeinheit 80 gleitet die Haltekontur 20 an der Fase 88 entlang, bis diese in die Sicherungskontur 56 springt. Durch die Fase 88 der Aufnahmeeinheit 80 wird die Haltekontur 20 radial zur Drehachse 9 verschoben, ohne dabei das Stellelement 24 betätigen zu müssen.

Wie in Fig. 8 schematisch angedeutet, ist in der besonders bevorzugten Ausführungsform in der Aufnahmetasche 76 der Befestigungsvorrichtung 10 eine weitere Öffnung 93 vorgesehen. Die weitere Öffnung 93 bildet einen Schmutzschacht, der sich von der Aufnahmetasche 76 bis hin zu der dem Mähkopf 3 zugewandten Außenseite der Befestigungsvorrichtung 10. Die weitere Öffnung 93 ist in etwa am inneren Ende der Aufnahmetasche 76 der Befestigungsvorrichtung 10 vorgesehen. So kann in der Aufnahmetasche 76 befindlicher Schmutz durch die weitere Öffnung 93 aus der Aufnahmetasche 76 befördert werden. Dies hat zur Folge, dass der Bewegungsmechanismus der Sperreinheit 18 nicht durch Schmutzpartikel blockiert werden kann.

In der bevorzugten Ausführung der erfindungsgemäßen Anordnung 2 ist ein zweites Federelement 89 vorgesehen. Das Federelement 89 ist derart angeordnet, dass das Federelement 89 in befestigtem Zustand des Mähkopfes 3 eine Vorspannung auf den Mähkopf 3 ausübt, die in Richtung der Drehachse 9 den Mähkopf 3 von der Befestigungsvorrichtung 10 wegdrückt. Ist die Haltekontur 20 nicht richtig in der Sicherungskontur 56 eingerastet, wird der Mähkopf 3 durch das zweite Federelement 89 von der Abtriebswelle 8 geschoben. Ein weiterer Vorteil des zweiten Federelementes 89 besteht darin, dass der Mähkopf 3 gegen die Befestigungsvorrichtung 10 derart vorgespannt wird, dass kein axiales Spiel zwischen der Haltekontur 20 und der Sicherungskontur 56 besteht. Das zweite Federelement 89 ist im bevorzugten Ausführungsbeispiel mit einem Ende am Gehäuse 4 des Mähkopfes 3 befestigt. Das andere Ende des zweiten Federelementes 89 stützt sich gegen die Abtriebswelle 8, insbesondere gegen die Zwischenwelle 72 ab. Das zweite Federelement 89 ist bevorzugt als Schraubenfeder ausgebildet.

Wie insbesondere in den Figuren 6 und 8 gezeigt, umfasst der Mähkopf 3 neben der Aufnahmeeinheit 80 das Gehäuse 4 sowie vorteilhaft eine Haube 90. Das Gehäuse 4 umfasst ein Gehäuseoberteil 5 sowie ein Gehäuseunterteil 49. Das Gehäuseoberteil 5 bildet insbesondere die Oberseite 35 des Mähkopfes 3, das Gehäuseunterteil 49 die Unterseite 34. Das Gehäuseoberteil 5 und das Gehäuseunterteil 49 sind über Klippverbindungen miteinander verbunden. Das Gehäuseoberteil 5 ist topfförmig ausgebildet. Der Mähkopf 3 umfasst eine an dem Gehäuse 4 vorgesehene Werkzeugaufnahme 37. Die Werkzeugaufnahme 37 ist zur Aufnahme des Schneidwerkzeuges 7 vorgesehen. Im vorliegenden Ausführungsbeispiel ist die Werkzeugaufnahme 37 eine Fadenspule 6 zur Aufnahme eines Schneidfadens. Die Fadenspule 6 ist in dem topfförmigen Gehäuseoberteil 5 angeordnet. Die Fadenspule 6 kann über eine Weiterschalteinrichtung relativ gegenüber dem Gehäuse 4 gedreht werden, wodurch der Schneidfaden von der Fadenspule 6 abgewickelt wird. Der Schneidfaden ist von der Fadenspule 6 über Öffnungen im Gehäuse 4 nach außen geführt. Die Weiterschalteinrichtung kann durch ein Betätigungselement 50, das im Ausführungsbeispiel auf der Unterseite 34 des Mähkopfes 3 angeordnet ist, betätigt werden. Im vorliegenden Ausführungsbeispiel ist das Betätigungselement 50 durch das Gehäuseunterteil 49 gebildet. Derartige Weiterschaltungen sind aus dem Stand der Technik hinreichend bekannt.

In einer alternativen Ausbildung des Mähkopfes 3 kann die Werkzeugaufnahme 37 auch zum Halten mindestens eines Schneidmessers ausgebildet sein. Es kann auch zweckmäßig sein, eine Werkzeugaufnahme 37 vorzusehen, die derart ausgebildet ist, dass mindestens ein Schneidfaden und mindestens ein Schneidmesser am Mähkopf 3 befestigbar sind. Dann besteht die Werkzeugaufnahme 37 mindestens aus einer Halterung für den Schneidfaden und mindestens einer Halterung für ein Schneidmesser. Das Schneidmesser ist insbesondere ein Schneidmesser aus Kunststoff oder einem Material vergleichbarer Dichte.

Wie in den Figuren 6 und 8 gezeigt, ist im Ausführungsbeispiel das Gehäuseoberteil 5 drehbar auf der Aufnahmeeinheit 80, insbesondere auf der Umfangsseite 87 der Aufnahmeeinheit 80 gehalten. Das Gehäuseoberteil 5 ist in Richtung der Drehachse 9 relativ zur Aufnahmeeinheit 80 verschiebbar gehalten. Die Fadenspule 6 ist auf der Aufnahmeeinheit 80 drehfest angeordnet. An der Fadenspule 6 sind Mitnehmer ausgebildet, die in entsprechende Taschen an der Innenseite des Gehäuseoberteils 5 eingreifen. Somit wird in Betrieb des Arbeitsgerätes 1 das Gehäuse 4 über die Fadenspule 6 und die Fadenspule 6 wiederum über die Aufnahmeeinheit 80 drehend angetrieben. Wird das Betätigungselement 50 gedrückt, wird das Gehäuse 4 auf der Aufnahmeeinheit 80 relativ zur Fadenspule 6 verschoben, so dass die Mitnehmer der Fadenspule 6 nicht mehr in die Taschen des Gehäuseoberteils 5 eingreifen. Infolge dreht sich die Fadenspule 6 relativ zum Gehäuse 4, wodurch sich der Schneidfaden von der Fadenspule 6 abwickelt. Die Haube 90 ist drehfest auf der Aufnahmeeinheit 80 gehalten. Die Haube 90 ist insbesondere formschlüssig bezüglich der Drehrichtungen 32, 33 auf der Aufnahmeeinheit 80 befestigt. Die Haube 90 ist bevorzugt über eine keilwellenartige Verbindung 92 auf der Aufnahmeeinheit 80 gehalten (Fig. 5). Um einen Schneidfaden auf die Fadenspule 6 aufzuwickeln, ohne dabei den Mähkopf 3 zu demontieren, kann der Bediener die Fadenspule 6 indirekt über das Festhalten der Haube 90 fixieren und zugleich das Gehäuse 4 drehen. Dadurch erfolgt eine Relativdrehung zwischen Gehäuse 4 und der Fadenspule 6, die zum Aufwickeln des Schneidfadens auf der Fadenspule 6 führt. Um die Haube 90 ergonomisch greifen zu können, erstreckt sich diese radial zur Drehachse 9 über das Gehäuseoberteil 5 des Mähkopfes 3.

Es kann in einer alternativen Ausführung auch vorgesehen sein, das Gehäuse 4, insbesondere das Gehäuseoberteil 5, drehfest auf der Aufnahmeeinheit 80 anzuordnen und die Fadenspule 6 drehbar auf der Aufnahmeeinheit 80 und/oder einem Dom des Gehäuses 4, insbesondere des Gehäuseoberteils 5 anzuordnen. Die Rotation der Abtriebswelle 8 wird durch die Aufnahmeeinheit 80 auf das Gehäuse 4 übertragen und die Fadenspule 6 durch das Gehäuse 4 mitgenommen.

Der Bediener kann den Mähkopf 3 mittels der Befestigungsvorrichtung 10, die einen Schnellverschlusses bildet, einfach und werkzeuglos von dem Arbeitsgerät 1 abnehmen und den Mähkopf 3 abseits des Arbeitsgerätes 1 in einer ergonomischen Haltung aufwickeln oder gegen einen anderen, bereits befüllten Mähkopf 3 austauschen. Durch den Schnellverschluss lässt sich die Zeit für den Werkzeugwechsel reduzieren und/oder die Ergonomie bei dem Werkzeugwechsel erhöhen.

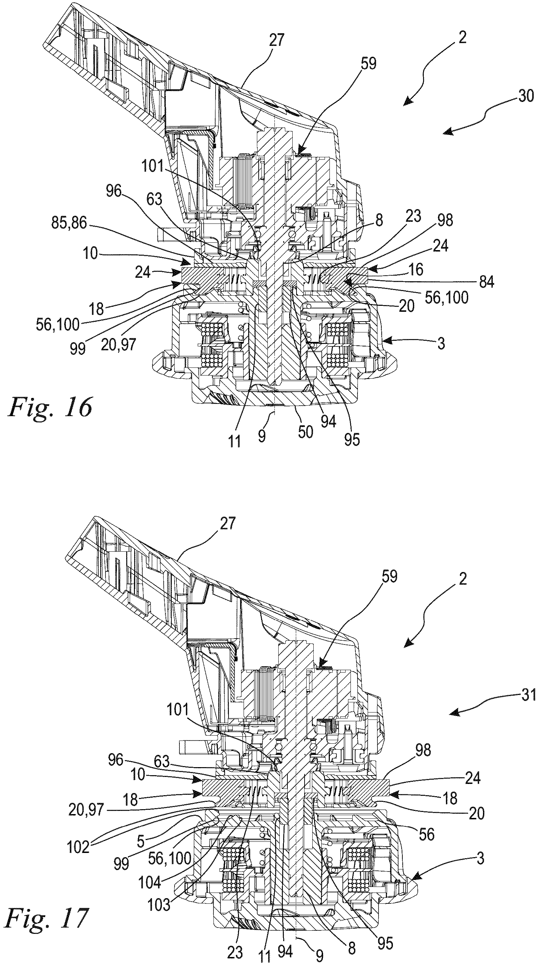

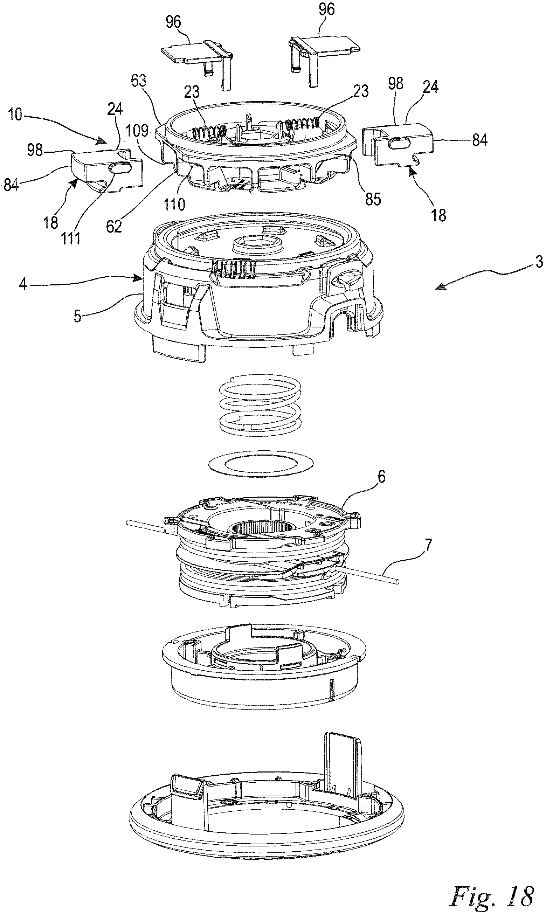

In den Figuren 16 und 17 ist ein alternatives Ausführungsbeispiel der erfindungsgemäßen Anordnung 2 gezeigt. In dieser Anordnung 2 umfasst die Befestigungsvorrichtung 10 zwei Sperreinheiten 18. Die Sperreinheiten 18 sind in dem Grundkörper 63 der Befestigungsvorrichtung 10 gehalten. An der dem vorderen Gehäuse 27 zugewandten Seite des Grundkörpers 63 ist das Lüfterrad 62 (Fig. 18) zur Erzeugung eines Kühlluftstromes für den Antriebsmotor 59 vorgesehen.

Wie in den Figuren 16 und 17 gezeigt, umfasst die Sperreinheit 18 das Stellelement 24, das Federelement 23 und einen Halterahmen 96. Das Stellelement 24 ist aus einem Grundkörper 98 gebildet. Der Grundkörper 98 weist eine in etwa kubische Geometrie auf. Auf der dem Mähkopf 3 zugewandten Seite des Stellelementes 24 ist ein Greifhaken 97 ausgebildet. Am Greifhaken 97 ist die Haltekontur 20 ausgebildet. Der Greifhaken 97 ist unmittelbar an dem Stellelement 24 ausgebildet. Der Greifhaken 97 ist mit dem Stellelement 24 vorzugsweise einteilig ausgebildet. Das Stellelement 24 weist eine dem Drehachse 9 zugwandte Innenseite auf, an der das Federelement 23 mit seinem einen Ende befestigt ist. Das Federelement 23 stützt sich mit seinem anderen Ende gegen den Grundkörper 63 der Befestigungsvorrichtung 10 ab. Das Federelement 23 spannt das Stellelement 24 bezogen auf die Drehachse 9 radial nach außen vor. Die Außenseite 84 des Stellelementes 24 bildet gemeinsam mit der Außenseite 85 des Grundkörpers 63 der Befestigungsvorrichtung 10 die Umfangsseite 86 der Befestigungsvorrichtung 10. Das Stellelement 24 ist derart in der Befestigungsvorrichtung 10 angeordnet, dass dieses durch den Bediener eingedrückt werden kann. Der Bediener kann das Stellelement 24 unmittelbar kontaktieren und radial zur Drehachse 9 eindrücken. Das Stellelement 24 ist in dem Halterahmen 96 geführt gehalten. Wie in Fig. 18 gezeigt, ist das Lüfterrad 62 an dem Grundkörper 63 der Befestigungsvorrichtung 10 ausgebildet. Das Lüfterrad 62 dient zur Kühlung des Antriebsmotors 59. Zudem enthält der Grundkörper 63 Führungstaschen 109 für die Stellelemente 24 und einen Anschlag 110, welcher ein radiales Herausfallen der Stellelemente 24 in der Außerbetriebsstellung 31 verhindert. Der Anschlag wirkt mit einem Vorsprung 111 der Stellelemente 24 zusammen. Der Grundkörper 63 der Befestigungsvorrichtung 10 bildet somit das Lüfterrad 62 sowie die Führungstaschen 109, damit also die Aufnahmen für die Stellelemente 24. Der Grundkörper 63 ist einteilig ausgebildet.

Wie in den Figuren 16 und 17 gezeigt, umfasst der Mähkopf 3 die Sicherungskontur 56, wobei die Sicherungskontur 56 mit der Haltekontur 20 der Befestigungsvorrichtung 10 die axiale Sicherung 16 bildet. Die Sicherungskontur 56 des Mähkopfes 3 ist auf dem Gehäuseoberteil 5 angeordnet. Die Sicherungskontur 56 des Mähkopfes 3 ist bevorzugt auf der der Befestigungsvorrichtung 10 zugewandten Seite des Gehäuseoberteils 5 angeordnet. Die Sicherungskontur 56 ist in Form eines umlaufenden Gegenhakens 100 gebildet. Der Gegenhaken 100 bildet wiederum eine Sicherungsnut 99, in die die Haltekontur 20 der Sperreinheit 18 greift. Folglich sind in der Sperrstellung 30 (Fig. 16) die Haltekontur 20 und die Sicherungskontur 56 im Eingriff. Die Stellelemente 24 sind in Richtung von der Drehachse 9 radial nach außen gedrückt, so dass die Greifhaken 97 der Stellelemente 24 in die Sicherungsnut 99 des Gehäuseoberteils 5 eingreifen. Dadurch ist der Mähkopf 3 auf der Abtriebswelle 8 gegen eine Verschiebung in Richtung der Drehachse 9 der Abtriebswelle 8 gesichert.

In Fig. 17 ist die Anordnung 2 in der Außerbetriebsstellung 31 gezeigt. Zum Lösen des Mähkopfes 3 von der Abtriebswelle 8 sind die Stellelemente 24 in Richtung zur Drehachse 9 der Abtriebswelle hin ein zudrücken, so dass die Haltekonturen 20 und Sicherungskonturen 56 nicht mehr ineinander eingreifen. Demnach ist der Mähkopf 3 nicht mehr axial auf der Abtriebswelle 8 gesichert. Der Mähkopf 3 kann von der Abtriebswelle 8 gezogen werden.

Wie in den Figuren 16 und 17 gezeigt, ist die Befestigungsvorrichtung 10 über eine Mutter 94 mit einer Stützscheibe 95 auf der Abtriebswelle 8 befestigt. Die Befestigungsvorrichtung 10 ist über die Mutter 94 gegen eine Wellenschulter 101 gepresst. Die Verdrehsicherung 11 zwischen dem Mähkopf 3 und der Abtriebswelle 8 ist bevorzugt über die Außengeometrie der Mutter 94 gebildet. Die Mutter 94 ist bevorzugt als Sechskant ausgebildet. Der Mähkopf 3 liegt formschlüssig an dem Sechskant der Mutter 94 an, wodurch der Mähkopf 3 drehsicher auf der Abtriebswelle 8 gehalten ist. Auch andere drehfeste Verbindungen zwischen dem Mähkopf 3 und der Abtriebswelle 8 können zweckmäßig sein.

Wie in den Figuren 16 und 17 gezeigt, weisen die Greifhaken 97 der Stellelemente 24 sowie der umlaufende Gegenhaken 100 an dem Gehäuseoberteil 5 jeweils Abschrägungen 102 auf, die auf den Oberseiten und den Unterseiten der Greifhaken 97 sowie der Gegenhaken 100 ausgebildet sind. Die Abschrägungen sind derart ausgebildet, dass mit Aufschieben des Mähkopfes 3 gegen die Befestigungsvorrichtung 10 die Stellelemente 24 ohne diese unmittelbar betätigen zu müssen, radial zur Drehachse hingeschoben werden, bis die Sicherungskontur 56 und die Haltekontur 20 einrasten. Zudem ist an dem Gehäuseoberteil 5 ein um die Drehachse 9 umlaufender Vorsprung 103 vorgesehen. Der Vorsprung 10 weist eine schräg zur Drehachse 9 verlaufende Abstoßfläche 104 auf, die mit einer Rückenfläche des Greifhakens 97 zusammenwirkt. Beim Betätigen der Stellelemente 24 wirken die Rückenflächen des Greifhakens 97 gegen die Abstoßfläche 104 derart zusammen, dass der Mähkopf 3 in Richtung von der Befestigungsvorrichtung 10 weggedrückt wird.

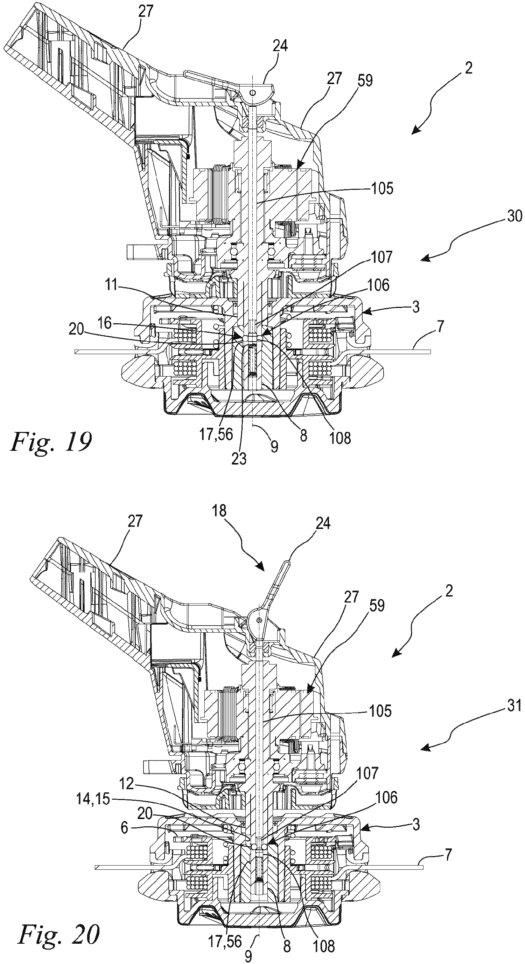

In den Figuren 19 und 20 ist ein weiteres, alternatives Ausführungsbeispiel der erfindungsgemäßen Anordnung 2 gezeigt. In dieser Anordnung 2 ist die Sicherungskontur 56 an dem Mähkopf 3 ausgebildet. Die Sicherungskontur 56 ist im Ausführungsbeispiel unmittelbar an einer Nabe des Mähkopfes 3 ausgebildet. Die Sicherungskontur 56 ist als Nut in der Nabe des Mähkopfes 3 ausgebildet. Die Haltekontur 20 ist in der Ausführung durch mindestens eine Kugel gebildet. Die mindestens eine Kugel liegt in einer Öffnung 106 der Abtriebswelle 8. In Sperrstellung 30 der axialen Sicherung 16 liegt die mindestens eine Kugel anteilig in der Sicherungskontur 56 und anteilig in der Öffnung 106 der Abtriebswelle 8. Dadurch wird der Mähkopf 3 durch die mindestens eine Kugel an der Abtriebswelle 8 gehalten. In der Außerbetriebsstellung 31 der axialen Sicherung 16 befindet sich die mindestens eine Kugel vollständig in der Öffnung 106 der Abtriebswelle 8. Der Mähkopf 3 ist in Richtung der Drehachse 9 nicht mehr durch die Befestigungsvorrichtung 10 gesichert und kann abgezogen werden (Fig. 20).

Wie in den Figuren 19 und 20 gezeigt, ist die Abtriebswelle 8 als Hohlwelle ausgebildet. Durch die Hohlwelle ragt eine Sicherungsstange 105. An der Sicherungsstange 105 ist eine weitere Nut 107 und eine an der Nut 107 angrenzende Anlagefläche 108 vorgesehen. Der Durchmesser der Anlagefläche 108 ist größer als der Durchmesser der Nut 107. In der Sperrstellung 30 ist die Sicherungsstange 105 derart ausgerichtet, dass die Anlagefläche 108 an der Kugel anliegt und diese in die Sicherungskontur 56 drückt. Dabei wird die Kugel durch die Anlagefläche 108 der Sicherungsstange 105 bezogen auf die Drehachse 9 radial nach außen in die Sicherungskontur 56 gedrückt. In dieser Stellung sind die Kugel als Haltekontur 20 der Sicherungsstange 105 und die Sicherungskontur 56 des Mähkopfes 3 im Eingriff, wodurch der Mähkopf 3 auf der Abtriebswelle 8 gehalten ist. In der Außerbetriebsstellung 31 der axialen Sicherung 16 ist die Sicherungsstange 105 derart ausgerichtet, dass die Kugel in der weiteren Nut 107 der Sicherungsstange 105 und in der Öffnung 106 der Abtriebswelle 8 liegt. Die Kugel sperrt den Mähkopf 3 nicht mehr. Der Mähkopf 3 kann von der Abtriebswelle 8 gezogen werden. Im vorliegenden Ausführungsbeispiel sind zwei Kugel als Haltekonturen 20 vorgesehen.

Wie in den Figuren 19 und 20 gezeigt, wird die Sicherungsstange 105 über das Stellelement 24 betätigt, das im vorliegenden Ausführungsbeispiel als Schnellspannhebel ausgebildet ist. Die Sicherungsstange 105 ist durch das Federelement 23 in Richtung von dem Mähkopf 3 zum vorderen Gehäuse 27 hin vorgespannt. Die Befestigungsvorrichtung 10 ist im vorliegenden Ausführungsbeispiel durch die Sperreinheit 18 gebildet. Die Sperreinheit 18 umfasst das als Schnellspannhebel ausgebildete Stellelement 24, die Sicherungsstange 105, das Federelement 23 sowie die Kugeln mit der Haltekontur20.

Die Verdrehsicherung 11 des Mähkopfes 3 ist im bevorzugten Ausführungsbeispiel durch einen ersten Teil 12, ein sechskantförmiger Abschnitt der Abtriebswelle 8, und durch einen zweiten Teil 14, eine entsprechende Gegenkontur 15 des Mähkopfes 3 ausgebildet. Somit sind der Mähkopf 3 und die Abtriebswelle 8 in Umfangsrichtung der Drehachse 9 formschlüssig miteinander verbunden.

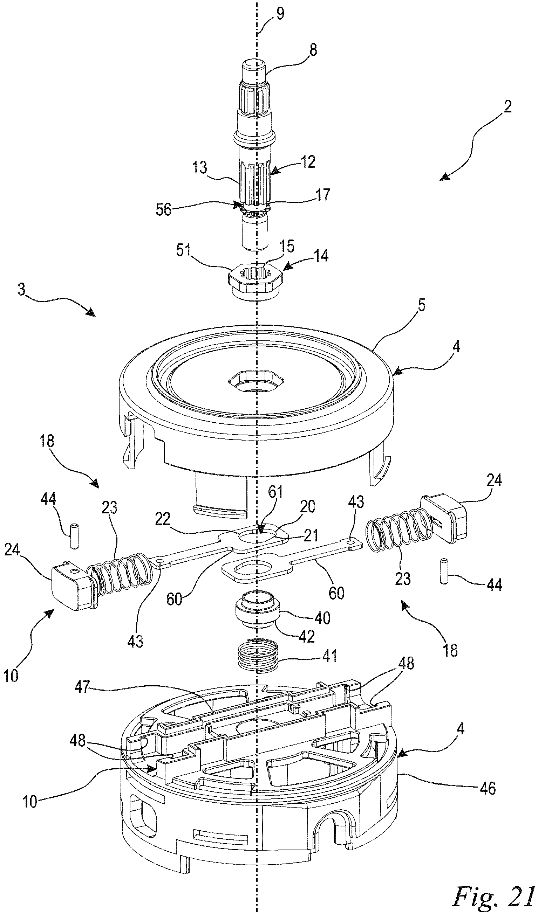

In den Figuren 21 bis 24 ist ein zusätzliches, alternatives Ausführungsbeispiel der erfindungsgemäßen Anordnung 2 gezeigt. Fig. 20 zeigt in einer Explosionsdarstellung die Anordnung 2 der Befestigungsvorrichtung 10, des Mähkopfes 3 und der Abtriebswelle 8. Wie auch in Fig. 21 gezeigt, umfasst die Anordnung 2 die Verdrehsicherung 11 und die axiale Sicherung 16. In der vorliegenden Ausführung ist der erste Teil 12 der Verdrehsicherung 11 als ein keilförmiger Wellenabschnitt 13 der Abtriebswelle 8 ausgebildet (Fig. 21). Die Abtriebswelle 8 ist einteilig ausgebildet. Keilförmiger Wellenabschnitt 13 bedeutet, dass entlang dieses Wellenabschnitts umfangsseitig mindestens ein keilförmiger Mitnehmer ausgebildet ist, wodurch das Drehmoment von der Abtriebswelle 8 auf die Nabe, hier das Gehäuse 4 des Mähkopfes 3, formschlüssig übertragen werden kann. Vorzugsweise ist der keilförmige Wellenabschnitt 13 aus mehreren keilförmigen Mitnehmern gebildet. Der zweite Teil 14 der Verdrehsicherung 11 ist eine an dem Gehäuse 4 ausgebildete Gegenkontur 15, die im Eingriff mit dem keilförmigen Wellenabschnitt 13 der Abtriebswelle 8 steht. Der zweite Teil 14 ist durch einen Einsatz 51 ausgebildet, der mit dem Gehäuseoberteil 5 formschlüssig in Umfangsrichtung der Drehachse 9 verbunden ist (Fig. 21). Der Einsatz 51 kann alternativ auch eingepresst werden. Auch andere Befestigungen des Einsatzes 51 im Gehäuseoberteil 5 können zweckmäßig sein. Alternativ kann das zweite Teil 14 unmittelbar an dem Gehäuseoberteil 5 des Gehäuses 4 ausgebildet sein. Die Abtriebswelle 8 und der Mähkopf 3 sind durch den ersten Teil 12 und den zweiten Teil 14 der Verdrehsicherung 11 unmittelbar miteinander verbunden. Mittels der Verdrehsicherung 11 ist der Mähkopf 3 auf der Abtriebswelle 8 vorzugsweise lediglich drehfest gehalten, wodurch eine Verschiebung des keilförmigen Wellenabschnitts 13 gegenüber der Gegenkontur 15 des Gehäuses 4 in Richtung der Drehachse 8 möglich ist.

Die axiale Sicherung 16 der erfindungsgemäßen Anordnung 2 umfasst im Ausführungsbeispiel zwei Sperreinheiten 18, die an dem Mähkopf 3 vorgesehen sind, und eine an der Abtriebswelle 8 ausgebildete Sicherungskontur 56. Die Sicherungskontur 56 ist im Ausführungsbeispiel ebenfalls als Nut 17 ausgebildet. In der Sperrstellung 30 greift die Sperreinheit 18 in die Nut 17 und blockiert somit eine axiale Verschiebung des Mähkopfes 3 auf der Abtriebswelle 8. In der Sperrstellung 30 ist der Mähkopf 3 in Richtung der Drehachse 9 auf der Abtriebswelle 8 gesichert. In der Außerbetriebsstellung 31 des Mähkopfes 3 gibt die Sperreinheit 18 die Nut 17 und damit die Abtriebswelle 8 frei. Der Mähkopf 3 ist auf der Abtriebswelle 8 in Richtung der Drehachse 9 verschiebbar. Der Mähkopf 3 kann von der Abtriebswelle 8 gelöst werden.

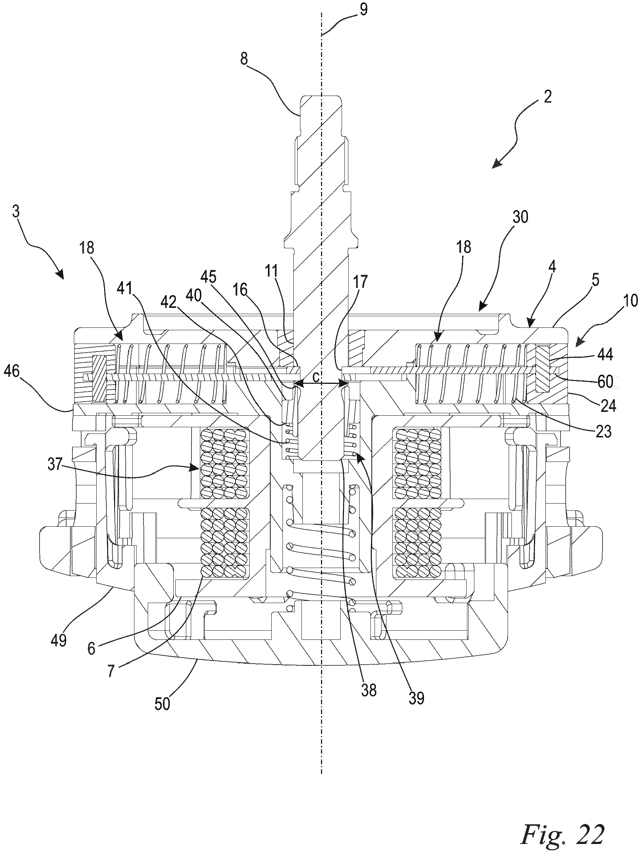

Wie in Fig. 21 gezeigt, umfasst die Sperreinheit 18 den Schieberahmen 60. Der Schieberahmen 60 weist die Haltekontur 20 auf. In der Sperrstellung 30 wirkt die Haltekontur 20 der Sperreinheit 18 mit der Sicherungskontur 56 zusammen. Der Mähkopf 3 ist auf der Abtriebswelle 8 gesichert. Im bevorzugten Ausführungsbeispiel weist der Schieberahmen 60 an seinem einen Ende die Öffnung 61 auf. An der Öffnung 61 ist die Haltekontur 20 vorgesehen. Die Abtriebswelle 8 durchragt den Schieberahmen 60 an seiner Öffnung 61 (Fig. 22), wobei die Haltekontur 20 in Sperrstellung 30 mit der Nut 17 der Abtriebswelle 8 zusammenwirkt. In einer alternativen Ausführung kann der Schieberahmen 60 an seinem einen Ende anstelle einer Öffnung 61 eine andere konstruktive Ausgestaltung mit einer Haltekontur 20 aufweisen. So kann der Schieberahmen 60 beispielsweise ein L-förmiges Ende aufweisen, welches die Abtriebswelle 8 hintergreift, wobei an dem Ende des Schieberahmens 60 die Haltekontur 20 ausgebildet ist. Auch andere konstruktive Ausgestaltungen des Schieberahmens 60 können zweckmäßig sein. An dem anderen Ende des Schieberahmens 60 ist das Stellelement 24 angeordnet, über das der Bediener den Schieberahmen 60 betätigen kann. Das Stellelement 24 ist über einen Zapfen 44 an dem Schieberahmen 60 befestigt, wobei der Zapfen 44 eine weitere Öffnung 43 durchragt, die an dem anderen Ende des Schieberahmens 60 vorgesehen ist. Der Schieberahmen 60 ist im Ausführungsbeispiel flächig ausgebildet, es kann jedoch auch zweckmäßig sein, den Schieberahmen 60 in Form eines Rundprofils oder dgl. auszubilden. Insbesondere kann es vorgesehen sein, den Schieberahmen 60 im Bereich der Haltekontur 20 keilförmig auszubilden. Es kann in einer alternativen Ausführung der Sperreinheit 18 auch zweckmäßig sein, den Schieberahmen 60 und das Stellelement 24 einteilig auszubilden. Vorteilhaft überlappt die Sperreinheit 18 der Axialsicherung 16 die Verdrehsicherung 11 in axialer Richtung, um axiale Bauhöhe zu reduzieren.

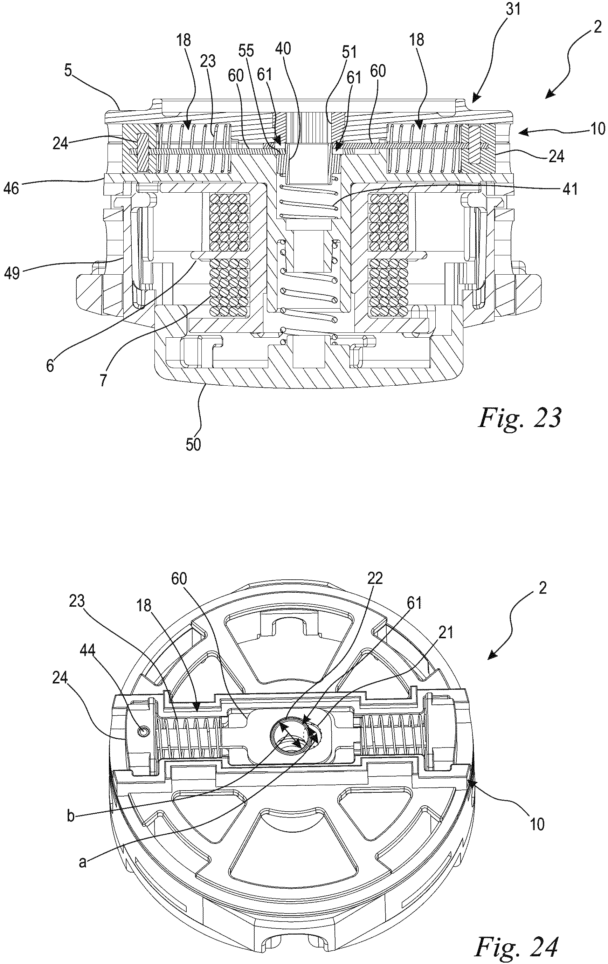

Wie in Fig. 21 gezeigt, weist die Öffnung 61 eine von einer Kreisform abweichende Gestalt auf. Im Ausführungsbeispiel ist die Öffnung 61 in Form eines Schlüssellochs ausgebildet. Die Öffnung 61 umfasst einen ersten Abschnitt 21 und einen zum ersten Abschnitt 21 benachbarten zweiten Abschnitt 22. Der Durchmesser a des ersten Abschnittes 21 ist kleiner als der Durchmesser b des zweiten Abschnittes 22 (Fig. 24). Beim Montieren und Demontieren des Mähkopfes 3 auf der Abtriebswelle 8 ist die Sperreinheit 18 in der Außerbetriebsstellung 31, wodurch sich die Abtriebswelle 8 durch den zweiten Abschnitt 22 der Öffnung 61 erstreckt. Der Durchmesser b des zweiten Abschnittes 22 ist größer als der maximale Durchmesser c des aufzufädelnden Endabschnittes der Abtriebswelle 8. In der Sperrstellung 30 der Sperreinheit 18 liegt die an dem ersten Abschnitt 21 ausgebildete Haltekontur 20 an der Nut 17 der Abtriebswelle 8 an, wonach sich die Abtriebswelle 8 durch den ersten Abschnitt 21 der Abtriebswelle 8 erstreckt. Der Durchmesser a des ersten Abschnittes 21 ist kleiner als der maximale Durchmesser c des Endabschnittes 38 der Abtriebswelle 8. Dadurch ist eine axiale Verschiebung des Mähkopfes 3 in Richtung der Drehachse 9 in der Sperrstellung 30 blockiert.

Wie in Fig. 21 gezeigt, umfasst die Sperreinheit 18 das Federelement 23, das die Haltekontur 20 der Sperreinheit 18 in die Nut 17 der Abtriebswelle 8 spannt. Im vorliegenden Ausführungsbeispiel ist das Federelement 23 an dem Gehäuse 4 abgestützt und wirkt auf das Stellelement 24 der Sperreinheit 18 derart, dass das Stellelement 24 und der Schieberahmen 60 radial zur Drehachse 9 in Richtung weg von der Abtriebswelle 8 gespannt sind. Das Federelement 23 ist als eine Schraubenfeder ausgebildet. Auch andere Federarten können in alternativer Ausführung zweckmäßig sein.

In Fig. 22 ist die Sperreinheit 18 in der Sperrstellung 30 gezeigt. Das Federelement 23 spannt über das Stellelement 24 den Schieberahmen 60 radial nach außen, wodurch die Haltekontur 20 der Öffnung 61 des Schieberahmens 60 in der Nut 17 der Abtriebswelle 8 gehalten ist. Diese Spannkraft wird im Betrieb des Mähkopfes 3 verstärkt, da die Fliehkräfte auf den Schiebrahmen 60 bezüglich der Drehachse 9 radial nach außen wirken. Somit wird die Haltekontur 20 des Schieberahmens 60 durch die Federkraft des Federelementes 23 und die auf den Schieberahmens 60 wirkenden Fliehkräfte in die Nut 17 der Abtriebswelle 8 gespannt. Eine axiale Verschiebung des Mähkopfes 3 auf der Abtriebswelle 8 ist nicht möglich. Die axiale Bewegung des Mähkopfes 3 gegenüber der Abtriebswelle 8 ist gesperrt.

In Fig. 23 ist die erfindungsgemäße Anordnung 2 in der Außerbetriebsstellung 31 des Mähkopfes 3 gezeigt. Um den Mähkopf 3 von der Abtriebswelle 8 zu lösen, muss der Bediener beide Sperreinheiten 18 entgegen der Federkraft des Federelementes 23 in Richtung zur Abtriebswelle 8 eindrücken. Hierfür ist das Stellelement 24, das dem Bediener zugänglich ist, von außen einzudrücken. Dabei wird der Schieberahmen 60 verschoben, wobei die Haltekontur 20 an der Öffnung 61 des Schieberahmens 60 aus der Nut 17 geschoben wird. In dieser Stellung wirken Haltekontur 20 und Nut 17 nicht mehr zusammen. Der Mähkopf 3 befindet sich in der Außerbetriebsstellung 31 und kann von der Abtriebswelle 8 gezogen werden.

Im vorliegen Ausführungsbeispiel sind zwei Sperreinheiten 18 vorgesehen, die auf gegenüberliegenden Seiten der Drehachse 9 angeordnet sind. Die Sperreinheiten 18 sind in einem um die Drehachse 9 gemessenen Winkel von in etwa 180° versetzt zueinander angeordnet. Dadurch wird eine gleichmäßige Massenverteilung des Mähkopfes 3 gewährleistet. Eine Unwucht im Betrieb des Mähkopfes 3 kann vermieden werden. Umfasst der Mähkopf 3 in einer alternativen Ausgestaltung lediglich eine Sperreinheit 18, ist vorzugsweise ein separater Massenausgleich vorzusehen. Sind mehr als zwei Sperreinheiten 18 am Mähkopf 3 vorgesehen, sind diese für eine gleichmäßige Massenverteilung in gleichen Winkelabständen um die Drehachse 9 zueinander anzuordnen. Die Sperrelemente 18 sind in einem gleichmäßigen Winkelabstand um die Drehachse 9 versetzt zueinander angeordnet.

Wie in den Figuren 22 und 23 gezeigt, umfasst der Mähkopf 3 eine Spannvorrichtung 39. Die Spannvorrichtung 39 dient dazu, die Sperreinheit 18 in der Außerbetriebsstellung 31 geöffnet zu halten, wodurch der Mähkopf 3 auf die Abtriebswelle 8 geschoben werden kann, ohne die Stellelemente 24 manuell zu betätigen. Eine weitere Funktion der Spannvorrichtung 39 besteht darin, den Mähkopf 3 axial in Richtung der Drehachse 9 gegen die Abtriebswelle 8 zu verspannen. Dadurch kann Spiel in axialer Richtung zwischen dem Mähkopf 3 und der Abtriebswelle 8 reduziert oder vermieden werden. Die Spannvorrichtung 39 umfasst eine Hülse 40 und eine Axialfeder 41. Die Hülse 40 sitzt auf dem Endabschnitt 38 der Abtriebswelle 8 und ist in Richtung der Drehachse 9 verschiebbar gelagert. Die Axialfeder 41 stützt sich an ihrem einen Ende an einer Schulter 42 der Hülse 40 ab, wobei die Hülse 40 wiederum an einer Wellenschulter 45 der Abtriebswelle 8 anliegt. Mit ihrem anderen Ende wirkt die Axialfeder 41 auf das Gehäuse 4. Ist die Anordnung 2 montiert, wirkt die Axialfeder 41 derart auf das Gehäuse 4 des Mähkopfes 3, dass das Gehäuse 4 entlang der Drehachse 9 in Richtung von der Abtriebswelle 8 weg gedrückt wird, wobei sich die Sperreinheit 18 axial in der Nut 17 verspannt. Ist der Mähkopf 3 in der Außerbetriebsstellung 31 (Fig. 23), drückt die Axialfeder 41 die Hülse 40 nach oben, bis die Hülse 40 mit einer der Schulter 42 abgewandten Rückschulter 55 an dem Schieberahmen 60 der Sperreinheit 18 zur Anlage kommt.

Lässt der Bediener die Stellelemente 24 los, werden die Schieberahmen 60 von dem Federelement 23 in Richtung von der Drehachse 9 weg gedrückt, bis der Schieberahmen 60 mit seiner Haltekontur 20 an der Hülse 40 zur Anlage kommt. Damit hält die Hülse 40 den Schieberahmen 60 geöffnet, wodurch ein erneutes Aufschieben des Mähkopfes 3 auf die Abtriebswelle 8 ermöglicht ist, ohne hierfür manuell die Stellelemente 24 zu betätigen. Des Weiteren deckt die Spannvorrichtung 39 mittels ihrer Hülse 40 einen vor der Wellenschulter 45 ausgebildeten Freistich ab. Dadurch wird eine Einrastung der Sperrelemente 24 in den Freistich vermieden.

In einer alternativen Ausgestaltung der Abtriebswelle 8, kann es zweckmäßig sein, anstelle der Nut 17 lediglich einen Absatz oder die umlaufende Wellenschulter 45 an der Abtriebswelle 8 vorzusehen. Durch die Axialfeder 41wird die Sperreinheit 18 dann gegen den Absatz oder die umlaufenden Wellenschulter 45 gespannt, wodurch der Mähkopf 3 in der Sperrstellung 30 ebenfalls auf der Abtriebswelle 8 gesichert ist.

Wie insbesondere in Fig. 21 gezeigt, umfasst die Befestigungseinrichtung 10 die Sperreinheiten 18 und eine Führung 47 für die Sperreinheiten 18. An der Führung 47 sind Anschläge 48 ausgebildet, gegen die das Stellelement 24 zur Anlage kommt. Die Befestigungsvorrichtung 10 ist auf einem Gehäusezwischenteil 46 des Mähkopfes 3 befestigt. Damit bildet in diesem Ausführungsbeispiel die Befestigungsvorrichtung 10 einen integrativen Bestandteil des Mähkopfes 3.

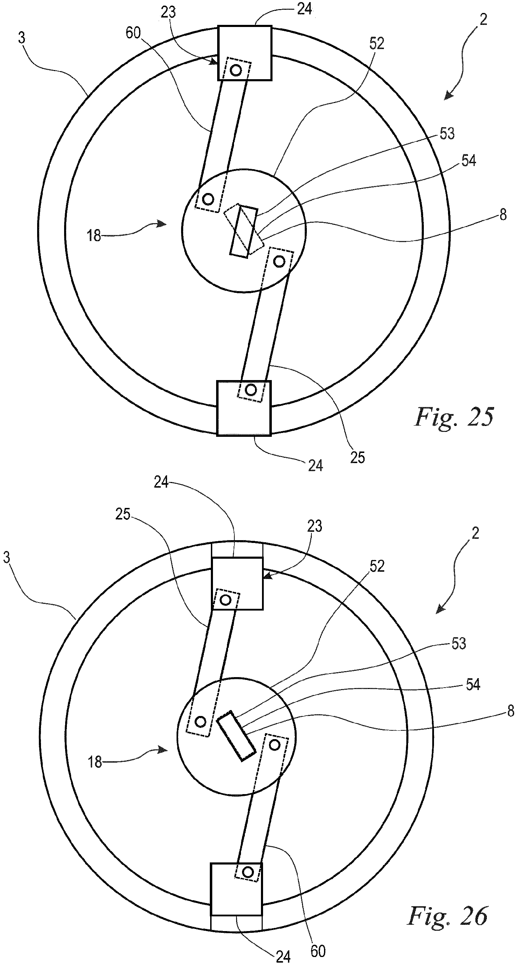

In den Figuren 25 und 26 ist ein zusätzliches, alternatives Ausführungsbeispiel der erfindungsgemäßen Anordnung 2 gezeigt, das lediglich schematisch dargestellt ist. Die Befestigungsvorrichtung 10 umfasst eine Sperreinheit 18, die zwei Stellelemente 24 und zwei Schieberahmen 60 aufweist. Die Schieberahmen 60 sind mit einer um die Drehachse 9 schwenkbaren Platte 52 gekoppelt, wobei die Platte 52 Teil der Sperreinheit 18 ist. Die Platte 52 ist koaxial zur Abtriebswelle 8 angeordnet. Die Platte 52 weist eine Öffnung 61 auf, die im Ausführungsbeispiel als eine Sperröffnung 53 ausgebildet ist. Durch die Sperröffnung 53 der Platte 52erstreckt sich die Abtriebswelle 8. In Fig. 24 ist die Sperreinheit 18 in Sperrstellung 30 gezeigt. Demnach ist die Sperröffnung 53 versetzt zur Querschnittskontur 54 der Abtriebswelle 8 an ihrem Endabschnitt 38 angeordnet. Demnach ist der Mähkopf 3 über die Platte 52 in Sperrstellung 30 an der Abtriebswelle 8 formschlüssig gehalten. Zum Lösen des Mähkopfes 3 von der Abtriebswelle 8 sind die Stellelemente 24 zu drücken. Dabei wird die Platte 52 durch die mit den Stellelementen 24 gekoppelten Schieberahmen 60 geschwenkt, bis die Sperröffnungen 53 mit der Querschnittskontur 54 der Abtriebswelle 8 deckungsgleich sind (Fig. 25). Der Formschluss zwischen Abtriebswelle 8 und Mähkopf 3 in Richtung der Drehachse 9 ist aufgehoben, wodurch der Mähkopf 3 von der Abtriebswelle 8 gelöst werden kann. Die Sperröffnung 53 sowie die der Sperröffnung 53 entsprechende Querschnittskontur 54 der Abtriebswelle 8 können beliebige Geometrien aufweisen, die einen derartigen Sperrmechanismus ermöglichen.

Im vorliegenden Ausführungsbeispiel ist die Geometrie der Sperröffnung 53 rechteckig ausgebildet. Auch in dieser Ausführung der erfindungsgemäßen Anordnung 2 liegt eine selbstverstärkende Klemmwirkung der Sperreinheit 18 aufgrund der wirkenden Fliehkräfte vor. Die Fliehkräfte bewirken, dass die Schieberahmen 60 mit den Stellelementen 24 bezüglich der Drehachse 9 radial nach außen beschleunigt werden und dadurch die Platte 52 mit der Öffnung 61 in der Sperrstellung 30 halten. Da der Massenschwerpunkt des Stellelementes 24 und des mit dem Stellelement unmittelbar gekoppelten Schieberahmens 60 außerhalb der Drehachse 9 liegen, erfolgt durch die Fliehkraft eine Beschleunigung auf den Massenschwerpunkt des Stellelementes 24 und des Schieberahmens 60 von der Drehachse 9 ausgehend radial nach außen. Dabei wird die Klemmwirkung der Sperreinheit 18 verstärkt.

Der Mähkopf 3 ist vorzugsweise derart ausgestaltet, dass der Mähkopf 3 auf der Abtriebswelle 8 als eine zusammenhängende Einheit befestigt und wieder gelöst werden kann. Separat vom Mähkopf 3 ausgebildete Einzelteile, beispielsweise zur Befestigung des Mähkopfes 3 an der Abtriebswelle 8, sind nicht vorgesehen. Dadurch ist die Montage und Demontage der erfindungsgemäßen Anordnung 2 erleichtert. Ferner weist die Anordnung neben dem Mähkopf 3 und der Abtriebswelle 8 keine weiteren Einzelteile auf, die der Benutzer bei der Montage oder Demontage der erfindungsgemäßen Anordnung 2 verlieren könnte.

In einem alternativen Ausführungsbeispiel der erfindungsgemäßen Anordnung 2 kann es zweckmäßig sein, an der Abtriebswelle 8 ein Adapterteil, insbesondere eine Hülse, vorzusehen. Das Adapterteil ist zwischen der Abtriebswelle 8 und dem Mähkopf 3 angeordnet. Die Verdrehsicherung 11 zwischen der Abtriebswelle 8 und dem Mähkopf 3 ist durch das Adapterteil gebildet. Das Adapterteil ist vorzugsweise mit der Abtriebswelle 8 in Drehrichtung um die Drehachse 9 formschlüssig verbunden. Das Adapterteil ist vorzugsweise mit dem Mähkopf 3 in Drehrichtung um die Drehachse 9 formschlüssig verbunden.

## Patentansprüche

1. Anordnung eines Mähkopfes (3), einer Abtrieswelle (8) zur Aufnahme eines Mähkopfes (3) und einer Befestigungsvorrichtung (10) zur Fixierung des Mähkopfes (3) auf der Abtriebswelle (8),
wobei die Abtriebswelle (8) um eine Drehachse (9) rotierend antreibbar ist,
wobei die Anordnung (2) eine Verdrehsicherung (11) und eine axiale Sicherung (16) aufweist,
wobei der Mähkopf (3) durch die Verdrehsicherung (11) auf der Abtriebswelle (8) drehfest gehalten ist,
wobei die axiale Sicherung (16) in einer Sperrstellung (30) den Mähkopf (3) auf der Abtriebswelle (8) gegen eine Relativbewegung in Richtung der Drehachse (9) der Abtriebswelle (8) formschlüssig sichert und in einer Außerbetriebsstellung (31) den Mähkopf (3) zum Lösen von der Abtriebswelle (8) freigibt, **dadurch gekennzeichnet, dass**
die Befestigungsvorrichtung (10) ein für den Bediener zugängliches Stellelement (24) umfasst, wobei die axiale Sicherung (16) mittels des Stellelementes (24) in die Sperrstellung (30) und in die Außerbetriebsstellung (31) schaltbar ist.

2. Anordnung nach Anspruch 1,
**dadurch gekennzeichnet, dass** die Verdrehsicherung (11) als eine formschlüssige Verbindung ausgebildet ist.

3. Anordnung nach einem der Ansprüche 1 bis 2,
**dadurch gekennzeichnet, dass** der Mähkopf (3) auf der Abtriebswelle (8) werkzeuglos befestigbar und lösbar ist.

4. Anordnung nach einem der Ansprüche 1 bis 3,
**dadurch gekennzeichnet, dass** die axiale Sicherung (16) eine Haltekontur (20) und eine Sicherungskontur (56) umfasst, wobei in der Sperrstellung (30) der axialen Sicherung (16) die Haltekontur (20) in die Sicherungskontur (56) eingreift.

5. Anordnung nach Anspruch 4,
**dadurch gekennzeichnet, dass** die Haltekontur (20) bezüglich der Drehachse (9) der Abtriebswelle (8) durch das Stellelement (24) insbesondere radial verschiebbar ausgebildet ist.

6. Anordnung nach Anspruch 5,
**dadurch gekennzeichnet, dass** die Haltekontur (20) Teil der Befestigungsvorrichtung (10) ist und die Sicherungskontur (56) am Mähkopf (3) ausgebildet ist.

7. Anordnung nach Anspruch 5,
**dadurch gekennzeichnet, dass** die Haltekontur (20) Teil des Mähkopfes (3) ist und die Sicherungskontur (56) an der Abtriebswelle (8) ausgebildet ist.

8. Anordnung nach einem der Ansprüche 4 bis 7,
**dadurch gekennzeichnet, dass** die Haltekontur (20) an einem Schieberahmen (60) ausgebildet ist.

9. Anordnung nach Anspruch 8,
**dadurch gekennzeichnet, dass** der Schieberahmen (60) eine Öffnung (61) umfasst, wobei die Sicherungskontur (56) in der Öffnung (61) des Schieberahmens (60) angeordnet ist.

10. Anordnung nach einem der Ansprüche 4 bis 7,
**dadurch gekennzeichnet, dass** die Haltekontur (20) durch mindestens einen in die Sicherungskontur (56) greifenden Sperrkörper, insbesondere eine Kugel, ausgebildet ist.

11. Anordnung nach einem der Ansprüche 1 bis 10,
**dadurch gekennzeichnet, dass** die Befestigungsvorrichtung (10) einen einteilig ausgebildeten Grundkörper (63) umfasst, wobei an dem Grundkörper (63) der Befestigungsvorrichtung (10) ein Lüfterrad (62) ausgebildet ist.

12. Anordnung nach Anspruch 11,
**dadurch gekennzeichnet, dass** der Grundkörper (63) eine Aufnahmetasche (76) aufweist, wobei in der Aufnahmetasche (76) das Stellelement (24) der Befestigungsvorrichtung (10) gehalten ist.

13. Anordnung nach einem der Ansprüche 1 bis 12,
**dadurch gekennzeichnet, dass** die Anordnung (2) ein Federelement (23) umfasst, wobei das Federelement (23) derart mit der Haltekontur (20) wirkverbunden ist, dass die Haltekontur (20) in die Sicherungskontur (56) gespannt ist.

14. Anordnung nach einem der Ansprüche 1 bis 13,
**dadurch gekennzeichnet, dass** die Anordnung (2) eine Sperreinheit (18) umfasst, wobei die Sperreinheit (18) das Stellelement (24), die Haltekontur (20) sowie sämtliche Bauteile umfasst, über die die Haltekontur (20) und das Stellelement (24) miteinander wirkverbunden sind, wobei der Massenschwerpunkt der Sperreinheit (18) derart außerhalb der Drehachse (9) liegt, dass im Betrieb der Anordnung (2) die auf die Sperreinheit (18) wirkenden Fliehkräfte die Klemmung der Haltekontur (20) gegen die Sicherungskontur (56) in der Sperrstellung (30) verstärken.

15. Handgeführtes Arbeitsgerät mit einer Anordnung gemäß einem der Ansprüche 1 bis 14.
